Europäisches Patentamt

European Patent Office

Office européen des brevets

(19)

(11) Veröffentlichungsnummer: **0 521 919 B1**

## (12) EUROPÄISCHE PATENTSCHRIFT

(45) Veröffentlichungstag der Patentschrift: **14.09.94**

(21) Anmeldenummer: **91906162.2**

(22) Anmeldetag: **09.03.91**

(86) Internationale Anmeldenummer:
**PCT/EP91/00448**

(87) Internationale Veröffentlichungsnummer:
**WO 91/14515 (03.10.91 91/23)**

(51) Int. Cl.5: **B05D 7/26**, C08F 265/06,
C09D 151/00, //(C08F265/06,
220:10,220:20)

(54) **VERFAHREN ZUR HERSTELLUNG EINER MEHRSCHICHTIGEN LACKIERUNG UND FÜR DIESES VERFAHREN GEEIGNETE WÄSSRIGE BASISLACKE.**

(30) Priorität: **28.03.90 DE 4009857**

(43) Veröffentlichungstag der Anmeldung:
**13.01.93 Patentblatt 93/02**

(45) Bekanntmachung des Hinweises auf die
Patenterteilung:
**14.09.94 Patentblatt 94/37**

(84) Benannte Vertragsstaaten:
**AT BE CH DE DK ES FR GB IT LI NL SE**

(56) Entgegenhaltungen:

**Chemical Abstracts, vol., 111, no. 22 27 November 1989, (Columbus, Ohio, US) see pages 108,109, abstract no. 196859q & JP, A, 01104665 (TOYO INK MFG. CO. LTD.) 21 April 1989 (Kat. X)**

(73) Patentinhaber: **BASF Lacke + Farben AG
Glasuritstrasse 1
D-48165 Münster-Hiltrup (DE)**

(72) Erfinder: **SCHWARTE, Stephan
Richard-Wagner-Str. 6
D-4407 Emsdetten (DE)**
Erfinder: **NIEMANN, Jürgen
Schafhofstr. 44
D-8700 Würzburg (DE)**
Erfinder: **LASSMANN, Walter
Hülsebrockstr. 32
D-4400 Münster (DE)**
Erfinder: **PIONTEK, Susanne
Karl-Immermann-Str. 20
D-4400 Münster (DE)**
Erfinder: **POTH, Ulrich
Albachtener Str. 97 d
D-4400 Münster (DE)**
Erfinder: **EIKELMANN, Klaus
Warendorfer Str. 5
D-4400 Münster (DE)**
Erfinder: **DOBBELSTEIN, Arnold**

**Verstorben (DE)**

(74) Vertreter: **Münch, Volker, Dr.**
**BASF Lacke + Farben AG**
**Patente/Lizenzen/Dokumentation**
**Postfach 61 23**
**D-48136 Münster (DE)**

**Beschreibung**

Die Erfindung betrifft ein Verfahren zur Herstellung einer mehrschichtigen, schützenden und/oder dekorativen Lackierung, bei dem

(1) als Basislack ein wäßriger pigmentierter Basislack auf die Substratoberfläche aufgebracht wird

(2) aus dem in Stufe (1) aufgebrachten Lack ein Polymerfilm gebildet wird

(3) auf der so erhaltenen Basisschicht ein transparenter Decklack aufgebracht wird und anschließend

(4) die Basisschicht zusammen mit dem Decklack eingebrannt wird.

Bei diesem Verfahren handelt es sich um das gut bekannte base coat/clear coat-Verfahren, das vor allem in der Automobilindustrie zur Herstellung hochwertiger Decklackierungen, insbesondere Metalleffektlackierungen eingesetzt wird (vgl. z.B. EP-A-38 127, EP-A-89 497 und DE-OS-36 28 124).

Die Erfindung betrifft auch wäßrige Lacke, die in dem o.g. Verfahren als Basislacke eingesetzt werden können.

Bei dem in Rede stehenden basecoat/clearcoat-Verfahren werden im überwiegenden Maße Basislacke eingesetzt, die als Verdünnungs- und/oder Lösemittel ausschließlich organische Lösemittel enthalten.

Die Lackindustrie ist aus ökologischen und ökonomischen Gründen bestrebt, einen möglichst großen Teil der organischen Lösemittel durch Wasser zu ersetzen. Es besteht ein großer Bedarf an wäßrigen Basislacken, die im oben beschriebenen basecoat/clearcoat-Verfahren verwendbar sind. Ein wesentliches Merkmal des basecoat/clearcoat-Verfahrens besteht darin, daß der transparente Decklack auf die noch nicht eingebrannte Basisschicht lackiert wird und erst danach Basisschicht und Decklack gemeinsam eingebrannt werden (Naß-in-Naß-Verfahren).

Die der vorliegenden Erfindung zugrundeliegende Aufgabenstellung besteht in der Bereitstellung neuer wäßriger Lacke, die als Basislacke für das basecoat/clearcoat-Verfahren verwendbar sind. Diese Aufgabe wird überraschenderweise durch die Bereitstellung von wäßrigen, pigmentierten Lacken gelöst, die dadurch gekennzeichnet sind, daß sie ein wasserverdünnbares Polyacrylatharz enthalten, das erhältlich ist, indem

(I)

(a1) 2,5 bis 15, vorzugsweise 3 bis 7 Gew.-% eines mindestens eine Carboxylgruppe pro Molekül tragenden, mit (b1), (b2), (b3) und (a2) copolymerisierbaren ethy- lenisch ungesättigten Monomeren oder eines Gemisches aus solchen Monomeren zusammen mit

(a2) 0 bis 60, vorzugsweise 0 bis 28 Gew.-% eines carboxylgruppenfreien, mit (b1), (b2), (b3) und (a1) copolymerisierbaren ethylenisch ungesättigten Monomers oder eines Gemisches aus solchen Monomeren und

eine Komponente (b), bestehend aus

(b1) 40 bis 90, vorzugsweise 40 bis 80 Gew.-% eines mit (b2), (b3), (a1) und (a2) copolymerisierbaren, im wesentlichen carboxylgruppenfreien (Meth)acrylsäureesters oder eines Gemisches aus solchen (Meth)acrylsäureestern und

(b2) 0 bis 45, vorzugsweise 4 bis 34 Gew.-% eines mit (b1), (b3), (a1) und (a2) copolymerisierbaren, ethylenisch ungesättigten Monomeren, das mindestens eine Hydroxylgruppe pro Molekül trägt und im wesentlichen carboxylgruppenfrei ist oder eines Gemisches aus solchen Monomeren und

(b3) 0 bis 40, vorzugsweise 10 bis 30 Gew.-% eines mit (b1), (b2), (a1) und (a2) copolymerisierbaren, im wesentlichen carboxylgruppenfreien, von (b1) und (b2) verschiedenen, ethylenisch ungesättigten Monomeren oder eines Gemisches aus solchen Monomeren

nacheinander oder in Teilmengen alternierend zu einem organischen Lösemittel oder Lösemittelgemisch gegeben werden und in Gegenwart mindestens eines Polymerisationsinitiators polymerisiert werden und

(II) nach Beendigung der Polymerisation das erhaltene Polyacrylatharz zumindest teilweise neutralisiert und in Wasser dispergiert wird, wobei die Summe der Gewichtsanteile von (a1) (a2), (b1), (b2) und (b3) stets 100 Gew.-% ergibt und (b1), (b2), (b3), (a1) und (a2) in Art und Menge so ausgewählt werden, daß das Polyacrylatharz eine Hydroxylzahl von 0 bis 200, vorzugsweise 20 bis 120, eine Säurezahl von 20 bis 100, vorzugsweise 25 bis 50 und eine Glasübergangstemperatur ($T_G$) von -40 °C bis +60 °C, vorzugsweise -20 °C bis +40 °C, aufweist.

Die erfindungsgemäß eingesetzten wasserverdünnbaren Polyacrylatharze ermöglichen die Formulierung von Basislacken, die - insbesondere im Vergleich zu bekannten polyacrylatharzhaltigen Basislacken - einen erhöhten Feststoffgehalt und eine geringere Läuferneigung aufweisen. Außerdem führt der Einsatz der erfindungsgemäßen wasserverdünnbaren Polyacrylatharze insbesondere in polyurethanhaltigen Basislacken zu einer Stabilisierung gegenüber schwankender Scherbelastung. Insbesondere bei Belastung durch schwache Scherkräfte treten gegenüber dem Stand der Technik geringere bzw. keine Viskositätserniedrigungen auf. Das hat ein verbessertes Absetzverhalten, einfachere Handhabbarkeit und erhöhte Applikationssicherheit zur Folge.

Bevor die Herstellung der erfindungswesentlichen, wasserverdünnbaren Polyacrylatharze näher beschrieben wird, werden zwei Begriffsklärungen vorausgeschickt:

1.) Als Abkürzung für "Methacrylsäure- oder Acrylsäure-" wird gelegentlich (Meth)acrylsäure- verwendet.

2.) Die Formulierung "im wesentlichen carboxylgruppenfrei" soll ausdrücken, daß die Komponenten (b1), (b2), und (b3) einen geringen Carboxylgruppengehalt (höchstens aber soviel, daß ein aus den Komponenten (b1), (b2), und (b3) hergestellte Polyacrylatharz eine Säurezahl von höchstens 10 hat) aufweisen können. Es ist aber bevorzugt, daß der Carboxylgruppengehalt der Komponenten (b1), (b2), und (b3) so niedrig wie möglich gehalten wird. Besonders bevorzugt werden carboxylgruppenfreie (b1), (b2), (und (b3) Komponenten eingesetzt.

Zur Herstellung der erfindungsgemäß einzusetzenden Polyacrylatharze kann als Komponente (a1) jedes mindestens eine Carboxylgruppe pro Molekül tragende, mit (a2), (b1), (b2) und (b3) copolymerisierbare ethylenisch ungesättigte Monomer oder ein Gemisch aus solchen Monomeren eingesetzt werden. Als Komponente (a1) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt. Als Komponente (a1) können z.B. auch Bernsteinsäuremono(meth)acryloyloxiethylester und Phtalsäuremono(meth)acryloyloxiethylester eingesetzt werden.

Als Komponente (a2) kann jedes carboxylgruppenfreie, mit (b1), (b2), (b3) und (a1) copolymerisierbare, ethylenisch ungesättigte Monomer oder ein Gemisch aus solchen Monomeren eingesetzt werden. Als Komponente (a2) können alle bei der Beschreibung der Komponenten (b1), (b2) und (b3) aufgezählten Monomere eingesetzt werden.

Als Komponente (b1) kann jeder mit (b2), (b3), (a1) und (a2) copolymerisierbare, im wesentlichen carboxylgruppenfreie Ester der (Meth)acrylsäure oder ein Gemisch aus solchen (Meth)acrylsäureestern eingesetzt werden. Als Beispiele werden Alkylacrylate und Alkylmethacrylate mit bis zu 20 Kohlenstoffatomen im Alkylrest , wie z.B. Methyl-, Ethyl-, Propyl-, Butyl-, Hexyl-, Ethylhexyl-, Stearyl- und Laurylacrylat und -methacrylat genannt. Bevorzugt werden Gemische aus Alkylacrylaten und/oder Alkylmethacrylaten als (b1) Komponente eingesetzt, die mindestens 25 Gew.-% n-Butyl- oder t-Butylacrylat und/oder n-Butyl- oder t-Butylmethacrylat enthalten.

Als Komponente (b2) können alle mit (b1), (b3), (a1) und (a2) copolymerisierbaren ethylenisch ungesättigten Monomere, die mindestens eine Hydroxylgruppe pro Molekül tragen und im wesentlichen carboxylgruppenfrei sind oder ein Gemisch aus solchen Monomeren eingesetzt werden. Als Beispiele werden Hydroxyalkylester der Acrylsäure, Methacrylsäure oder einer anderen $\alpha,\beta$-ethylenisch ungesättigten Carbonsäure genannt. Diese Ester können sich von einem Alkylenglykol ableiten, das mit der Säure verestert ist, oder sie können durch Umsetzung der Säure mit einem Alkylenoxid erhalten werden. Als Komponente (b2) werden vorzugsweise Hydroxyalkylester der Acrylsäure und Methacrylsäure, in denen die Hydroxyalkylgruppe bis zu 4 Kohlenstoffatome enthält, Umsetzungsprodukte aus cyklischen Estern, wie z.B. $\epsilon$-Caprolacton und diesen Hydroxyalkylestern oder Mischungen aus diesen Hydroxyalkylestern bzw. $\epsilon$-caprolactonmodifizierten Hydroxyalkylestern eingesetzt. Als Beispiele für derartige Hydroxyalkylester werden 2-Hydroxyethylacrylat, 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat und 4-Hydroxybutylmethacrylat genannt. Entsprechende Ester von anderen ungesättigten Säuren, wie z.B. Ethacrylsäure, Crotonsäure und ähnliche Säuren mit bis zu etwa 6 Kohlenstoffatomen pro Molekül, können auch eingesetzt werden.

Als Komponente (b3) können alle mit (b1), (b2), (a1) und (a2) copolymerisierbaren, im wesentlichen carboxylgruppenfreien, von (b1) und (b2) verschiedenen ethylenisch ungesättigten Monomere oder Gemische aus solchen Monomeren eingesetzt werden. Als Komponente (b3) werden vorzugsweise vinylaromatische Kohlenwasserstoffe, wie Styrol, $\alpha$-Alkylstyrol und Vinyltoluol eingesetzt.

Die erfindungsgemäß eingesetzten Polyacrylatharze können hergestellt werden, indem 2,5 bis 15, vorzugsweise 3 bis 7 Gew.-% der Komponente (a1) zusammen mit 0 bis 60, vorzugsweise 0 bis 28 Gew.-% der Komponente (a2) zu einem organischen Lösemittel oder Lösemittelgemisch gegeben werden, dort in Gegenwart mindestens eines Polymerisationsinitiators polymerisiert werden und nach Beendigung der Zugabe der Komponenten (a1) und (a2) eine Komponente (b), bestehend aus den Komponenten (b1), (b2) und gegebenenfalls (b3) zu dem organischen Lösemittel oder Lösemittelgemisch gegeben wird und dort in Gegenwart mindestens eines Polymerisationsinitiators polymerisiert wird. Mit der Zugabe der Komponente (b) sollte erst dann begonnen werden, wenn mindestens 60 Gew.-%, vorzugsweise mindestens 80 Gew.-% der Komponenten (a1) und (a2) umgesetzt worden sind. Es ist bevorzugt, mit der Zugabe der Komponente (b) erst dann zu beginnen, wenn die Komponenten (a1) und (a2) im wesentlichen vollständig umgesetzt worden sind. Nach Beendigung der Polymerisation wird das erhaltene Polyacrylatharz zumindest teilweise neutralisiert und in Wasser dispergiert. Die Summe der Gewichtsanteile von (a1), (a2) , (b1), (b2) und (b3)

EP 0 521 919 B1

beträgt stets 100 Gew.-%. Die Komponenten (a1), (a2), (b1), (b2) und (b3) werden in Art und Menge so ausgewählt, daß das Polyacrylatharz eine Hydroxylzahl von 0 bis 200, vorzugsweise 20 bis 120, eine Säurezahl von 20 bis 100, vorzugsweise 25 bis 50 und eine Glasübergangstemperatur ($T_G$) von -40 °C bis +60 °C, vorzugsweise -20 °C bis +40 °C, aufweist.

(a1) und (a2) werden vorzugsweise innerhalb von 10 bis 90 Minuten, besonders bevorzugt innerhalb von 30 bis 75 Minuten zu dem organischen Lösemittel oder Lösemittelgemisch gegeben und dort in Gegenwart mindestens eines freie Radikale bildenden Initiators polymerisiert. Die Komponente (b) wird vorzugsweise innerhalb von 2 bis 8 Stunden, besonders bevorzugt innerhalb von 3 bis 6 Stunden zu dem organischen Lösemittel oder Lösemittelgemisch gegeben und dort in Gegenwart mindestens eines freie Radikale bildenden Initiators polymerisiert.

Die erfindungsgemäß einzusetzenden Polyacrylatharze können auch hergestellt werden, indem (a1) und (a2) und die Komponente (b) in Teilmengen alternierend zu einem organischen Lösemittel oder Lösemittelgemisch gegeben werden und dort in Gegenwart mindestens eines freie Radikale bildenden Initiators polymerisiert werden. Die Teilmengen sollten dabei jeweils aus mindestens 10 Gew.-% der insgesamt einzusetzenden Menge an Komponente (a1) und (a2) bzw. Komponente (b) bestehen. Mit der Zugabe einer Teilmenge sollte erst dann begonnen werden, wenn mindestens 60 Gew.-%, vorzugsweise mindestens 80 Gew.-% der vorhergehenden Teilmenge umgesetzt worden sind. Es ist bevorzugt, mit der Zugabe einer Teilmenge erst dann zu beginnen, wenn die vorhergehende Teilmenge im wesentlichen vollständig umgesetzt worden ist. Nach Beendigung der Polymerisation wird das erhaltene Polyacrylatharz zumindest teilweise neutralisiert und in Wasser dispergiert. Die Summe der Gewichtsanteile von (a1), (a2), (b1), (b2) und (b3) beträgt stets 100 Gew.-%. Die Komponenten (a1), (a2), (b1), (b2) und (b3) werden in Art und Menge so ausgewählt, daß das Polyacrylatharz eine Hydroxylzahl von 0 bis 200, vorzugsweise 20 bis 120, eine Säurezahl von 20 bis 100, vorzugsweise 25 bis 50 und eine Glasübergangstemperatur ($T_G$) von -40 °C bis +60 °C, vorzugsweise -20 °C bis +40 °C, aufweist.

In einer bevorzugten Ausführungsform dieses Herstellungsverfahrens wird in einem ersten Schritt eine aus 30 bis 70 Gew.-%, vorzugsweise eine aus 40 bis 60 Gew.-%, besonders bevorzugt eine aus 50 Gew.-% der insgesamt einzusetzenden Menge an Komponente (b) bestehende Teilmenge der Komponente (b) (Teilmenge 1) zu dem organischen Lösemittel oder Lösemittelgemisch gegeben und in Gegenwart mindestens eines freie Radikale bildenden Initiators polymerisiert. Nach Beendigung der Zugabe der Teilmenge 1 wird in einem zweiten Schritt eine aus 30 bis 70 Gew.-%, vorzugsweise eine aus 40 bis 60 Gew.-%, besonders bevorzugt eine aus 50 Gew.-% der insgesamt einzusetzenden Menge an Gemisch aus (a1) und (a2) bestehende Teilmenge des Gemisches aus (a1) und (a2) (Teilmenge 2) zu dem organischen Lösemittel oder Lösemittelgemisch gegeben und in Gegenwart mindestens eines freie Radikale bildenden Initiators polymerisiert. Nach Beendigung der Zugabe der Teilmenge 2 wird in einem dritten Schritt eine aus 30 bis 70 Gew.-%, vorzugsweise eine aus 40 bis 60 Gew.-%, besonders bevorzugt eine aus 50 Gew.-% der insgesamt einzusetzenden Menge an Komponente (b) bestehende Teilmenge der Komponente (b) (Teilmenge 3) zu dem organischen Lösemittel oder Lösemittelgemisch gegeben und in Gegenwart mindestens eines freie Radikale bildenden Initiators polymerisiert. Nach Beendigung der Zugabe der Teilmenge 3 wird in einem vierten Schritt eine aus 30 bis 70 Gew.-%, vorzugsweise eine aus 40 bis 60 Gew.-%, besonders bevorzugt eine aus 50 Gew.-% der insgesamt einzusetzenden Menge an Gemisch aus (a1) und (a2) bestehende Teilmenge des Gemisches aus (a1) und (a2) (Teilmenge 4) zu dem organischen Lösemittel oder Lösemittelgemisch gegeben und in Gegenwart mindestens eines freie Radikale bildenden Initiators polymerisiert.

Mit der Zugabe der Teilmenge 2, 3 und 4 sollte erst dann begonnen werden, wenn mindestens 60 Gew.-%, vorzugsweise 80 Gew.-% der jeweils vorgehenden Teilmenge umgesetzt worden sind. Es ist bevorzugt, mit der Zugabe einer Teilmenge erst dann zu beginnen, wenn die vorgehende Teilmenge im wesentlichen vollständig umgesetzt worden ist.

Nach Beendigung der Polymerisation wird das erhaltene Polyacrylatharz zumindest teilweise neutralisiert und in Wasser dispergiert. Die Summe der Gewichtsanteile von (a1), (a2), (b1), (b2) und (b3) beträgt stets 100 Gew.-%. Die Komponenten (a1), (a2), (b1), (b2) und (b3) werden in Art und Menge so ausgewählt, daß das Polyacrylatharz eine Hydroxylzahl von 0 bis 200, vorzugsweise 20 bis 120, eine Säurezahl von 20 bis 100, vorzugsweise 25 bis 50 und eine Glasübergangstemperatur ($T_G$) von -40 °C bis +60 °C, vorzugsweise -20 °C bis +40 °C, aufweist.

Die Zugabe der Teilmengen 1 und 3 erfolgt vorzugsweise innerhalb von 1 bis 4 Stunden, besonders bevorzugt innerhalb von 1 1/2 bis 3 Stunden. Die Zugabe der Teilmengen 2 und 4 erfolgt vorzugsweise innerhalb von 5 bis 30 Minuten, besonders bevorzugt innerhalb von 7 bis 20 Minuten.

Als organische Lösemittel und Polymerisationsinitiatoren werden die für die Herstellung von Polyacrylatharzen üblichen und für die Herstellung von wäßrigen Dispersionen geeigneten Lösemittel und Polymerisa-

5

tionsinitiatoren eingesetzt. Als Beispiele für brauchbare Lösemittel werden Butylglykol, 2-Methoxypropanol, n-Butanol, Methoxybutanol, n-Propanol, Ethylenglycolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether und 3-Methyl-3-methoxybutanol genannt. Als Beispiele für brauchbare Polymerisationsinitiatoren werden freie Radikale bildende Initiatoren, wie z.B. Benzoylperoxid, t-Butylperethylhexanoat, Azobisisobutyronitril und t-Butylperbenzoat genannt. Die Polymerisation wird zweckmäßigerweise bei einer Temperatur von 80 bis 160 °C, vorzugsweise 110 bis 160 °C durchgeführt. Die Polymerisation ist beendet, wenn alle eingesetzten Monomeren im wesentlichen vollständig umgesetzt worden sind.

Die Komponenten (a1), (a2), (b1), (b2) und (b3) werden in Art und Menge so ausgewählt, daß das Reaktionsprodukt eine Hydroxylzahl von 0 bis 200, vorzugsweise 20 bis 120, eine Säurezahl von 20 bis 100, vorzugsweise 25 bis 50 und eine Glasübergangstemperatur ($T_G$) von -40 °C bis +60 °C, vorzugsweise -20 °C bis +40 °C, aufweist.

Die Glasübergangstemperaturen von Polyacrylatharzen können näherungsweise nach folgender Formel berechnet werden:

$$\frac{1}{T_G} = \sum_{n=1}^{n=x} \frac{W_n}{T_{Gn}}$$

$T_G$ = Glasübergangstemperatur des Polyacrylatharzes

x = Anzahl der im Polyacrylatharz einpolymerisierten verschiedenen Monomeren.

$W_n$ = Gewichtsanteil des n-ten Monomers

$T_{Gn}$ = Glasübergangstemperatur des Homopolymers aus dem n-ten Monomer

Die Menge und Zugabegeschwindigkeit des Initiators wird vorzugsweise so gesteuert, daß das erhaltene Polyacrylatharz ein zahlenmittleres Molekulargewicht von 2500 bis 20 000 aufweist. Es ist besonders bevorzugt, die Initiatorzugabe zum gleichen Zeitpunkt wie die Zugabe der polymerisierbaren Komponenten (a1), (a2) und (b) zu beginnen und etwa eine halbe Stunde nachdem die Zugabe der polymerisierbaren Komponenten (a1), (a2) und (b) beendet worden ist, zu beenden. Danach wird das Reaktionsgemisch noch so lange (in der Regel etwa 1 1/2 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Nach Beendigung der Polymerisation wird das erhaltene Polyacrylatharz zumindest teilweise neutralisiert und in Wasser dispergiert.

Zur Neutralisation können sowohl organische Basen als auch anorganische Basen verwendet werden. Vorzugsweise werden primäre, sekundäre und tertiäre Amine, wie z.B. Ethylamin, Propylamin, Dimethylamin, Dibutylamin, Cyclohexylamin, Benzylamin, Morpholin, Piperidin und Triethanolamin verwendet. Besonders bevorzugt werden tertiäre Amine als Neutralisationsmittel eingesetzt, insbesondere Dimethylethanolamin, Triethylamin, Tripropylamin und Tributylamin.

Die Neutralisationsreaktion wird im allgemeinen durch Mischen der neutralisierenden Base mit dem Polyacrylatharz durchgeführt. Dabei wird vorzugsweise soviel Base eingesetzt, daß der Basislack einen pH-Wert von 7-8,5, vorzugsweise 7,2 bis 7,8 aufweist.

Anschließend wird das partiell oder vollständig neutralisierte Polyacrylatharz durch Zugabe von Wasser dispergiert. Dabei entsteht eine wäßrige Polyacrylatharzdispersion. Gegebenenfalls kann ein Teil oder das gesamte organische Lösemittel abdestilliert werden. Die erfindungsgemäßen Polyacrylatharzdispersionen enthalten Polyacrylatharzteilchen, deren mittleren Teilchengröße vorzugsweise zwischen 60 und 300 nm liegt (Meßmethode: Laserlichtstreuung, Meßgerät: Malvern Autosizer 2C).

Mit den oben beschriebenen Polyacrylatharzen als Bindemittel können erfindungsgemäße wäßrige Basislacke hergestellt werden. Es ist jedoch bevorzugt, die Polyacrylatharze mit mindestens einem wasserverdünnbaren Polyurethanharz und/oder mindestens einem wasserverdünnbaren Polyesterharz und/oder mindestens einem wasserverdünnbaren Aminoplastharz als Bindemittel zu kombinieren. Bei Basislacken, die nur nichtmetallische Pigmente bzw. Mischungen aus nichtmetallischen Pigmenten und keine Metallpigmente enthalten, wird vorzugsweise eine Mischung eingesetzt aus

EP 0 521 919 B1

(A) 10 bis 95, vorzugsweise 25 bis 70 Gew.-% des erfindungsgemäßen wasserverdünnbaren Polyacrylatharzes,

(B) 5 bis 50, vorzugsweise 10 bis 40 Gew.-% eines Aminoplastharzes,

(C) 0 bis 85, vorzugsweise 20 bis 60 Gew.-% eines wasserverdünnbaren Polyesterharzes und

(D) 0 bis 85, vorzugsweise 0 bis 40 Gew.-% eines wasserverdünnbaren Polyurethanharzes.

Die Summe der Gewichtsanteile der Komponenten (A) bis (D) beträgt stets 100 Gew.-%.

Bei Basislacken, die ein Metallpigment oder eine Mischung aus Metallpigmenten, ggf. in Kombination mit nichtmetallischen Pigmenten, enthalten, wird als Bindemittel vorzugsweise eine Mischung eingesetzt aus

(A) 0,1 bis 60, vorzugsweise 1 bis 30 Gew.-% des erfindungsgemäßen wasserverdünnbaren Polyacrylatharzes,

(B) 0 bis 50, vorzugsweise 5 bis 30 Gew.-% eines Aminoplastharzes,

(C) 0 bis 50, bevorzugt 15 bis 40 Gew.-% eines wasserverdünnbaren Polyesterharzes und

(D) 10 bis 99,9, vorzugsweise 20 bis 60 Gew.-% eines wasserverdünnbaren Polyurethanharzes.

Die Summe der Gewichtsanteile der Komponenten (A) bis (D) beträgt stets 100 Gew.-%.

Mit den in Rede stehenden Polyacrylatharzen können z.B. wasserverdünnbare Polyurethanharze kombiniert werden, die herstellbar sind, indem

(i) ein Polyester- und/oder Polyetherpolyol mit einem zahlenmittleren Molekulargewicht von 400 bis 5000 oder ein Gemisch aus solchen Polyester- und/oder Polyetherpolyolen

(ii) ein Polyisocyanat oder einem Gemisch aus Polyisocyanaten

(iii) eine Verbindung, die mindestens eine gegenüber Isocyanatgruppen reaktive und mindestens eine zur Anionenbildung befähigte Gruppe im Molekül aufweist oder ein Gemisch aus solchen Verbindungen

(iv) gegebenenfalls eine Hydroxyl- und/oder Aminogruppen enthaltende organische Verbindung mit einem Molekulargewicht von 40 bis 600 oder ein Gemisch aus solchen Verbindungen und

(v) gegebenenfalls eine Verbindung, die mindestens eine gegenüber NCO-Gruppen reaktive Gruppe und mindestens eine Poly(oxyalkylen)gruppe im Molekül aufweist oder ein Gemisch aus solchen Verbindungen

miteinander umgesetzt werden und das entstandene Reaktionsprodukt wenigstens teilweise neutralisiert wird. Das Polyurethanharz sollte zweckmäßigerweise eine Säurezahl von 10 bis 60 und ein zahlenmittleres Molekulargewicht von 4000 bis 25.000 aufweisen.

Die Polyurethanharze können aus (i), (ii), (iii), ggf. (iv) und gegebenenfalls (v) nach dem Fachmann gut bekannten Methoden der Polyurethanchemie hergestellt werden (vgl. z.B. US-PS-4,719,132, DE-OS-36 28 124, EP-A-89 497, EP-A-256 540 und WO 87/03829).

Als Komponente (i) können gesättigte und ungesättigte Polyester- und/oder Polyetherpolyole, insbesondere Polyester- und/oder Polyetherdiole mit einem zahlenmittleren Molekulargewicht von 400 bis 5000 eingesetzt werden. Geeignete Polyetherdiole sind z.B. Polyetherdiole der allgemeinen Formel $H(-0-(CHR^1)_n-)_mOH$, wobei $R^1$ = Wasserstoff oder ein niedriger, gegebenenfalls substituierter Alkylrest ist, n = 2 bis 6, bevorzugt 3 bis 4 und m = 2 bis 100, bevorzugt 5 bis 50 ist. Als Beispiele werden lineare oder verzweigte Polyetherdiole, wie Poly(oxyethylen)glykole, Poly(oxypropylen)glykole und Poly(oxybutylen)glykole genannt. Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxypropylen)-glykole im Molmassenbereich $M_n$ von 400 bis 3000.

Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit eingesetzt werden. Die Dicarbonsäuren und Diole können lineare oder verzweigte aliphatische, cycloaliphatische oder aromatische Dicarbonsäuren oder Diole sein.

Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen, wie Dimethylolcyclohexan. Es können jedoch auch kleine Mengen an Polyolen, wie Trimethylolpropan, Glycerin, Pentaerythrit, zugesetzt werden. Die Säurekomponente des Polyesters besteht in erster Linie aus niedermolekularen Dicarbonsäuren oder ihren Anhydriden mit 2 bis 30, bevorzugt 4 bis 18 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebacinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen beispielsweise Trimellithsäureanhydrid oder das Adukt von Maleinsäu-

7

reanhydrid an ungesättigte Fettsäuren anwesend sein.

Es können auch Polyesterdiole eingesetzt werden, die durch Umsetzung eines Lactons mit einem Diol erhalten werden. Sie zeichnen sich durch die Gegenwart von endständigen Hydroxylgruppen und wiederkehrenden Polyesteranteilen der Formel (-CO-(CHR$^2$)$_n$-CH$_2$-0) aus. Hierbei ist n bevorzugt 4 bis 6 und der Substituent R$^2$ Wasserstoff, ein Alkyl-, Cycloalkyl- oder Alkoxy-Rest.

Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte ε-Caprolacton, bei dem n den Wert 4 hat und alle R-Substituenten Wasserstoff sind, bevorzugt. Die Umsetzung mit Lacton kann durch niedermolekulare Polyole, wie Ethylenglykol, 1,3-Propandiol, 1,4 Butandiol, Dimethylolcyclohexan gestartet werden. Es können jedoch auch andere Reaktionskomponenten, wie Ethylendiamin, Alkyldialkanolamine oder auch Harnstoff mit Caprolacton umgesetzt werden.

Als Komponente (ii) können aliphatische und/oder cycloaliphatische und/oder aromatische Polyisocyanate eingesetzt werden. Als Beispiele für aromatische Polyisocyanate werden Phenylendiisocyanat, Toluylendiisocyanat, Xylylendiisocyanat, Biphenylendiisocyanat, Naphtylendiisocyanat und Diphenylmethandiisocyanat genannt.

Aufgrund ihrer guten Beständigkeit gegenüber ultraviolettem Licht ergeben (cyclo)aliphatische Polyisocyanate Produkte mit geringer Vergilbungsneigung. Beispiele hierfür sind Isophorondiisocyanat, Cyclopentylendiisocyanat sowie Hydrierungsprodukte der aromatischen Diisocyanate, wie Cyclohexylendiisocyanat, Methylcyclohexylendiisocyanat und Dicyclohexylmethandiisocyanat. Aliphatische Diisocyanate sind Verbindungen der Formel

OCN-(CR$^3$$_2$)$_r$ -NCO

worin r eine ganze Zahl von 2 bis 20, insbesondere 6 bis 8 ist und R$^3$, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Besonders bevorzugt werden als Diisocyanate Isophorondiisocyanat und Dicyclohexylmethandiisocyanat eingesetzt.

Die Komponente (ii) muß hinsichtlich der Funktionalität der Polyisocyanate so zusammengesetzt sein, daß kein vernetztes Polyurethanharz erhalten wird. Die Komponente (ii) kann neben Diisocyanaten auch einen Anteil an Polyisocyanaten mit Funktionalitäten über zwei - wie z.B. Triisocyanate - enthalten.

Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan. Die mittlere Funktionalität kann gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Um die Wasserverdünnbarkeit der eingesetzten Polyurethanharze zu gewährleisten, müssen zur Anionenbildung befähigte Gruppen in die Polyurethanmoleküle eingebaut werden. Die zur Anionenbildung befähigten Gruppen sorgen nach ihrer Neutralisation dafür, daß das Polyurethanharz in Wasser stabil dispergiert werden kann. Das Polyurethanharz soll eine Säurezahl von 10 bis 60, vorzugsweise 20 bis 35 aufweisen. Aus der Säurezahl kann die in die Polyurethanmoleküle einzuführende Menge an zur Anionenbildung befähigten Gruppen berechnet werden.

Die Einführung von zur Anionenbildung befähigten Gruppen in die Polyurethanmoleküle erfolgt über den Einbau von Verbindungen (iii).

Als Komponente (iii) werden vorzugsweise Verbindungen eingesetzt, die zwei gegenüber Isocyanatgruppen reaktive Gruppen im Molekül enthalten. Geeignete gegenüber Isocyanatgruppen reaktive Gruppen sind insbesondere Hydroxylgruppen sowie primäre und/oder sekundäre Aminogruppen. Geeignete zur Anionenbildung befähigte Gruppen sind Carboxyl-, Sulfonsäure- und/oder Phosphonsäuregruppen, wobei Carboxylgruppen bevorzugt sind. Als Komponente (iii) können beispielsweise Alkansäuren mit zwei Substituenten an α-ständigen Kohlenstoffatomen eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben zwei bis etwa 25, vorzugsweise 3 bis 10 Kohlenstoffatome. Beispiele für die Komponente (iii) sind Dihydroxypropionsäure, Dihydroxybernsteinsäure

8

und Dihydroxybenzoesäure. Eine besonders bevorzugte Gruppe von Alkansäuren sind die $\alpha,\alpha$-Dimethylolalkansäuren der allgemeinen Formel $R^4$-C(CH$_2$OH)$_2$COOH, wobei $R^4$ für ein Wasserstoffatom oder eine Alkylgruppe mit bis zu etwa 20 Kohlenstoffatomen steht. Beispiele für solche Verbindungen sind 2,2-Dimethylolessigsäure, 2,2-Dimethylolpropionsäure, 2,2-Dimethylolbuttersäure und 2,2-Dimethylolpentansäure. Die bevorzugte Dihydroxyalkansäure ist 2,2-Dimethylolpropionsäure. Aminogruppenhaltige Verbindungen sind beispielsweise $\alpha,\delta$-Diaminovaleriansäure,3,4-Diaminobenzoesäure, 2,4-Diaminotoluolsulfonsäure und 2,4-Diamino-diphenylethersulfonsäure.

Die erfindungsgemäß eingesetzten Polyurethanharze können gegebenenfalls unter Mitverwendung von Hydroxyl-und/oder Aminogruppen enthaltenden organischen Verbindungen mit einem Molekulargewicht von 40 bis 600, oder einem Gemisch aus solchen Verbindungen hergestellt werden (Komponente (iv)). Der Einsatz der Komponente (iv) führt zur Molekulargewichtserhöhung der Polyurethanharze. Als Komponente (iv) können beispielsweise Polyole mit bis zu 20 Kohlenstoffatomen je Molekül, wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäureneopentylglykolester, hydroxyethyliertes oder hydroxypropyliertes Bisphenol A, hydriertes Bisphenol A und deren Mischungen eingesetzt werden.

Die Polyole werden im allgemeinen in Mengen von bis zu 30 Gewichtsprozent, vorzugsweise 2 bis 20 Gewichtsprozent, bezogen auf die eingesetzte Menge an Komponenten (i) und (iv) eingesetzt. Als Komponente (iv) können auch Di- und/oder Polyamine mit primären und/oder sekundären Aminogruppen eingesetzt werden. Polyamine sind im wesentlichen Alkylen-Polyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Menthandiamin, Isophorondiamin, 4,4'-Diaminodicyclohexylmethan und Aminoethylethanolamin. Bevorzugte Diamine sind Hydrazin, Alkyl- oder Cycloalkyldiamine, wie Propylendiamin und 1-Amino-3-amino-methyl-2,5,5-trimethylcyclohexan. Es können auch Polyamine als Komponente (iv) eingesetzt werden, die mehr als zwei Aminogruppen im Molekül enthalten. In diesen Fällen ist jedoch z.B. durch Mitverwendung von Monoaminen darauf zu achten, daß keine vernetzten Polyurethanharze erhalten werden. Solche brauchbaren Polyamine sind Diethylentriamin, Triethylentetramin, Dipropylentriamin und Dibutylentriamin. Als Beispiel für ein Monoamin wird Ethylhexylamin genannt.

Mit Hilfe der Komponenten (v) können Poly(oxyalkylen)-gruppen als nichtionische stabilisierende Gruppen in die Polyurethanmoleküle eingeführt werden. Als Komponente (v) können beispielsweise eingesetzt werden Alkoxypoly(oxyalkylen)alkohole mit der allgemeinen Formel R'0-(-CH$_2$-CHR''-0-)$_n$ H in der R' für einen Alkylrest mit 1 bis 6 Kohlenstoffatomen, R'' für ein Wasserstoffatom oder einen Alkylrest mit 1 bis 6 Kohlenstoffatomen und n für eine Zahl zwischen 20 und 75 steht.

Die Herstellung der in Kombination mit dem erfindungswesentlichen Polyacrylatharz einsetzbaren Polyurethanharze gehört zum Stand der Technik und wird z.B. in der US-PS-4,719,132, DE-OS-3 628 124, EP-A-89 497, EP-A-256 450 und WO 87/03829 ausführlich beschrieben.

Die in Kombination mit den erfindungswesentlichen Polyacrylatharzen einsetzbaren wasserverdünnbaren Polyesterharze können aus Polycarbonsäuren und Polyolen nach allgemein gut bekannten Methoden hergestellt werden. Zur Herstellung der Polyesterharze können alle bei der Beschreibung der Komponente (i) aufgezählten Ausgangsstoffe eingesetzt werden.

Als wasserverdünnbare Polyesterharze werden vorzugsweise Polyesterharze eingesetzt, die erhältlich sind, indem

($\alpha$) Polyole oder ein Gemisch aus Polyolen und

($\beta$)Polycarbonsäuren oder Polycarbonsäureanhydride oder ein Gemisch aus Polycarbonsäuren und/oder Polycarbonsäureanhydriden zu einem Polyesterharz mit einem zahlenmittleren Molekulargewicht von 600 bis 5000, vorzugsweise 800 bis 2500, einer Säurezahl von 20 bis 70, vorzugsweise 25 bis 55 und einer Hydroxylzahl von 30 bis 200, vorzugsweise 45 bis 100 umgesetzt werden, wobei

- die Komponenten ($\alpha$) und ($\beta$) in einem molaren Verhältnis von 1,15 - 2,00 : 1, vorzugsweise 1,2 - 1,5 : 1 eingesetzt werden,

- die Komponente ($\alpha$) zu 30 bis 100 Mol-% aus aliphatischen Diolen besteht, die mindestens ein $\alpha$ C-Atom enthält, das sekundär, tertiär oder Glied eines kohlenstoffhaltigen Ringsystems ist und

- die Komponente ($\beta$) zu 50 bis 100 Mol-% aus aromatischen und/oder cycloaliphatischen Polycarbonsäuren und zu 15 bis 40 Mol-% aus Tri- und/oder Tetracarbonsäuren besteht, wobei die Tri- und/oder Tetracarbonsäuren so eingesetzt werden, daß sie über mindestens zwei Carboxylgruppen in die Polyesterharzmoleküle eingebaut werden.

Die Komponente ($\alpha$) besteht zu

($\alpha$1) 30 bis 100, vorzugsweise 50 bis 100 Mol-% aus aliphatischen Diolen, die mindestens ein $\alpha$-C-Atom enthalten, das sekundär, tertiär oder Glied eines kohlenstoffhaltigen Ringsystems ist.

($\alpha$2) 0 bis 20, vorzugsweise 0 bis 10 Mol-% aus aliphatischen Triolen und

($\alpha$3) 0 bis 40, vorzugsweise 0 bis 20 Mol-% aus ethergruppenhaltigen Diolen.

Als Komponente ($\alpha$1) kann prinzipiell jedes aliphatische Diol mit 4 bis 40, vorzugsweise 5 bis 12 Kohlenstoffatomen im Molekül eingesetzt werden, bei dem mindestens ein $\alpha$-C-Atom ein sekundäres oder tertiäres C-Atom oder ein Glied in einem kohlenstoffhaltigen Ringsystem ist. Es können auch Gemische solcher Diole eingesetzt werden. Als ($\alpha$1) Komponente sind beispielsweise Verbindungen einsetzbar, die mindestens ein Molekülfragment der allgemeinen Formel -C(R$^1$R$^2$)-CH$_2$OH enthalten, wobei R$^1$ und R$^2$ für aliphatische, cycloaliphatische oder aromatische Kohlenwasserstoffreste mit 1 bis 20, vorzugsweise 1 bis 6 Kohlenstoffatomen stehen. Als Beispiele für solche Verbindungen werden Neopentylglykol, 2-Methyl-2-propylpropandiol-1,3, 2-Ethyl-2-butylpropandiol-1,3, 2-Ethyl-2-phenylpropandiol-1,3, 2,2,4 Trimethylpentandiol 1,5, 2,2,5 Trimethylhexandiol 1,6 und Hydroxypivalinsäureneopentylglykolester genannt. Als Beispiel für eine Verbindung, in der mindestens ein $\alpha$-C-Atom Glied in einem kohlenstoffhaltigen Ringsystem ist, wird Dimethylolcyclohexan genannt. Als Komponente ($\alpha$1) werden vorzugsweise Neopentylglykol, Hydroxypivalinsäureneopentylglykolester, Dimethylolcyclohexan und 2-Ethyl-2-butylpropandiol-1,3 eingesetzt.

Als Komponente ($\alpha$2) können beispielsweise Glycerin, Trimethylolpropan und Trimethylolethan eingesetzt werden.

Als Komponente ($\alpha$3) werden insbesondere solche Diole eingesetzt, die 1 bis 10 Ethersauerstoffatome im Molekül enthalten oder Mischungen aus solchen Verbindungen. Als Beispiele für die Komponente ($\alpha$3) werden genannt: Diethylenglykol, Dipropylenglykol, Triethylenglykol, Tripropylenglykol, Tetraethylenglykol, Tetrapropylenglykol sowie Poly(ethylenoxid), Poly(propylenoxid) und Poly(ethylenoxid)(propylenoxid) mit zahlenmittleren Molekulargewichten von 400 bis 600.

Die Komponente ($\beta$) besteht zu

($\beta$1) 50 bis 100, vorzugsweise 50 bis 80 Mol-% aus aromatischen und/oder cycloaliphatischen Polycarbonsäuren oder Mischungen aus solchen Polycarbonsäuren und

($\beta$2) 0 bis 50, vorzugsweise 20 bis 50 Mol.-% aus aliphatischen Polycarbonsäuren oder Mischungen aliphatischer Carbonsäuren,

wobei der Anteil an Tri- oder Tetracarbonsäuren 15 bis 40 Mol.-% beträgt. Anstelle der Carbonsäuren können selbstverständlich auch reaktive Carbonsäurederivate, wie z.B. Carbonsäureanhydride eingesetzt werden.

Als Komponente ($\beta$1) kann prinzipiell jede cycloaliphatische oder aromatische Polycarbonsäure mit 5 bis 30, vorzugsweise 6 bis 18 Kohlenstoffatomen im Molekül oder ein Anhydrid dieser Polycarbonsäure oder ein Gemisch aus diesen Polycarbonsäuren bzw. deren Anhydriden eingesetzt werden. Als Beispiele für einsetzbare Polycarbonsäuren werden Isophthalsäure, Terephthalsäure, Orthophthalsäure, Tetrahydrophthalsäure, Hexahydrophthalsäure, 1,4 Cyclohexandicarbonsäure, Dicyclopentadiendicarbonsäure, Trimesinsäure (Benzol-1,3,5-tricarbonsäure), Trimellithsäure, Pyromellithsäure und Endomethylentetrahydrophtalsäure sowie deren Anhydride genannt. Als Komponente ($\beta$1) werden vorzugsweise Isophtalsäure, Terephtalsäure, Orthophtalsäure, Tetrahydrophtalsäure, Hexahydrophtalsäure, Trimellithsäure, Pyromellithsäure, deren Anhydride oder Gemische aus diesen Polycarbonsäuren bzw. deren Anhydriden eingesetzt.

Als Komponente ($\beta$2) kann prinzipiell jede lineare oder verzweigte aliphatische Polycarbonsäure mit 2 bis 40 Kohlenstoffatomen im Molekül oder ein Anhydrid dieser Polycarbonsäuren oder ein Gemisch aus diesen Polycarbonsäuren bzw. deren Anhydriden eingesetzt werden. Als Beispiele für einsetzbare aliphatische Polycarbonsäuren werden Oxalsäure, Malonsäure, Bernsteinsäure, Glutarsäure, Adipinsäure, Pimelinsäure, Korksäure, Azelainsäure, Sebacinsäure, Maleinsäure, Fumarsäure, polymerisierte Fettsäuren und Zitronensäure sowie deren Anhydride genannt. Als Komponente ($\beta$2) werden vorzugsweise Adipinsäure, Azelainsäure, Sebazinsäure, Bernsteinsäure, deren Anhydride oder Gemische aus diesen Polycarbonsäuren bzw. deren Anhydriden eingesetzt. Als Komponente ($\beta$2) werden ganz besonders bevorzugt polymerisierte, insbesondere dimerisierte Fettsäuren eingesetzt. Wenn als Komponente ($\beta$2) polymerisierte Fettsäuren eingesetzt werden, dann werden Basislacke von besonders guter Lagerstabilität erhalten.

Polymere Fettsäuren werden i.a. hergestellt, indem Fettsäuren, wie beispielsweise Linolen-, Linol- oder Ölsäure einzeln, im Gemisch oder im Gemisch mit gesättigten Fettsäuren polymerisiert werden. Es entsteht ein Gemisch, das je nach Reaktionsführung hauptsächlich dimere, aber auch monomere und trimere Moleküle sowie Nebenprodukte enthält. Üblicherweise wird destillativ gereinigt. Handelsübliche polymere Fettsäuren enthalten i.a. mindestens 80 Gew.-% dimere Fettsäuren, bis zu 20 Gew.-% trimere Fettsäuren und maximal 1 Gew.-% monomere Fettsäuren. Es ist bevorzugt, als Komponente (β2) polymere Fettsäuren einzusetzen, die zu mindestens 98 Gew.-% aus dimeren Fettsäuren und höchstens 2 Gew.-% trimeren Fettsäuren und höchstens Spuren monomerer Fettsäuren besteht.

Polymere Fettsäuren enthalten sowohl cyclische als auch lineare aliphatische Molekülfragmente. Im Sinne der vorliegenden Erfindungen werden sie jedoch nicht als cycloaliphatische, sondern als lineare aliphatische Polycarbonsäuren angesehen und sind somit der Komponente (β2) zuzuschlagen.

Als Tri- bzw. Tetracarbonsäuren werden vorzugsweise Trimellithsäure bzw. Pyromellithsäure, deren Gemische oder deren Anhydride eingesetzt.

Die Herstellung der wasserverdünnbaren Polyesterharze erfolgt nach allgemein gut bekannten Methoden der Polyesterchemie durch Umsetzung der Komponenten (α) und (β). Die Reaktionstemperatur sollte zweckmäßigerweise bei 140 bis 240, vorzugsweise 180 bis 220 °C liegen. In manchen Fällen kann es zweckmäßig sein, die Veresterungsreaktion zu katalysieren. Beispiele für brauchbare Katalysatoren sind Tetrabutyltitanat, Zinkoctoat, Zinnoctoat, Dibutylzinnoxid, organische Salze des Dibutylzinnoxids usw.. Bei der Veresterung ist darauf zu achten, daß die Tri- bzw. Tetracarbonsäuren so in die Polyesterharzmoleküle eingebaut werden, daß im statistische Mittel mindestens zwei Carboxylgruppen verestert werden.

Zur Neutralisation der Polyesterharze können Ammoniak und/oder Amine (insbesondere Alkylamine), Aminoalkohole und cyclische Amine, wie Di- und Triethylamin, Dimethylaminoethanolamin, Diisopropanolamin, Morpholin, N-Alkylmorpholin usw., eingesetzt werden. Für die Neutralisation werden leicht flüchtige Amine bevorzugt.

Die in Kombination mit den erfindungswesentlichen Polyacrylatharzen einsetzbaren Aminoplastharze werden von vielen Firmen als Verkaufsprodukte (z.B. Cymel[R] von American Cyanamid Company, Resimene[R] der Monsanto Company und Luwipal[R] der BASF AG) angeboten. Es handelt sich in der Regel um wenigstens teilweise veretherte Kondensationsprodukte aus aminogruppenhaltigen Verbindungen, insbesondere Melamin oder Benzoguanamin und Aldehyden, insbesondere Formaldehyd. Die Wasserverdünnbarkeit der Aminoplastharze hängt im allgemeinen vom Kondensationsgrad und von der Veretherungskomponente ab. Je niedriger der Kondensationsgrad und je kurzkettiger die Alkylgruppen in der Veretherungskomponente sind, desto besser ist die Wasserverdünnbarkeit der Aminoplastharze. Die Wasserverdünnbarkeit von Aminoplastharzen kann auch durch Einführung von Carboxylgruppen (z.B. Veretherung mit Hydroxycarbonsäuren) verbessert werden. Außerdem kann die Wasserverdünnbarkeit von Aminoplastharzen durch Zusatz von wasserverdünnbaren Lösemittel, wie z.B. Glykolether verbessert werden.

Neben den oben beschriebenen Bindemitteln können die erfindungsgemäßen Basislacke noch weitere wasserverdünnbare Kunstharze, die zum Anreiben der Pigmente und/oder als rheologiesteuernde Additive dienen, enthalten. Als Beispiele für solche Kunstharze werden genannt: Polyether, wie z.B. Polypropylenglykol mit einem zahlenmittleren Molekulargewicht von 400 bis 900, wasserlösliche Celluloseether, wie Hydroxyethylcellulose, Methylcellulose oder Carboxymethylcellulose sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid oder Ethylen-Maleinsäureanhydrid-Copolymere und ihre Derivate oder auch hydrophob modifizierte ethoxylierte Urethane oder carboxylgruppenhaltige Polyacrylate.

Die erfindungsgemäßen Basislacke können auch vernetzte Polymikroteilchen, wie sie z.B. in der EP-A-38 127 offenbart sind, enthalten.

Die erfindungsgemäßen Basislacke können auch anorganische Rheologiesteuerungsmittel, wie z.B. Schichtsilikate enthalten.

Als Pigmente können die erfindungsgemäßen Basislacke farbgebende Pigmente auf anorganischer Basis, wie z.B. Titandioxid, Eisenoxid, Ruß usw., und/oder farbgebende Pigmente auf organischer Basis und/oder übliche Metallpigmente (z.B. handelsübliche Aluminiumbronzen, Edelstahlbronzen...) und/oder nicht-metallische Effektpigmente (z.B. Perlglanz- bzw. Interferenzpigmente) enthalten. Die erfindungsgemäßen Basislacke enthalten vorzugsweise Metallpigmente und/oder Effektpigmente. Die Pigmentierungshöhe liegt in üblichen Bereichen.

Die erfindungsgemäßen Basislacke weisen bei Spritzviskosität im allgemeinen einen Festkörpergehalt von etwa 15 bis 50 Gew.-% auf. Der Festkörpergehalt variiert mit dem Verwendungszweck der Basislacke. Für Metalliclacke liegt er beispielsweise bevorzugt bei 17 bis 25 Gew.-%. Für unifarbige Lacke liegt er höher, beispielsweise bei 30 bis 45 Gew.-%.

Die erfindungsgemäßen Basislacke können zusätzlich übliche organische Lösemittel enthalten. Deren Anteil wird möglichst gering gehalten. Er liegt beispielsweise unter 15 Gew.-%.

Die erfindungsgemäßen Basislacke werden im allgemeinen auf einen pH-Wert zwischen 6,5 und 9,0 eingestellt. Der pH-Wert kann mit üblichen Aminen, wie z.B. Triethylamin, Dimethylaminoethanol und N-Methylmorpholin eingestellt werden.

Die erfindungsgemäßen Basislacke können sowohl bei der Serien- als auch bei der Reparaturlackierung eingesetzt werden. Sie werden vorzugsweise bei der Serienlackierung eingesetzt.

Als transparente Decklacke können Lacke auf Basis organischer Lösemittel, wasserverdünnbare Lacke und auch Pulverlacke eingesetzt werden. Die Lacke können als unpigmentierte Klarlacke oder als transparent pigmentierte Lacke eingesetzt werden.

Mit den erfindungsgemäßen Basislacken können auch ohne Überlackierung mit einem transparenten Decklack qualitativ hochwertige Lackierungen hergestellt werden. Auf diese Weise werden einschichtige Lackierungen erhalten, die sich durch einen besonders hohen Glanz auszeichnen.

Die erfindungsgemäßen Lacke können auf beliebige Substrate, wie z.B. Metall, Holz, Kunststoff oder Papier aufgebracht werden.

In den folgenden Beispielen wird die Erfindung näher erläutert.

Alle Angaben über Teile und Prozentsätze sind Gewichtsangaben, soweit nicht ausdrücklich etwas andees festgestellt wird.

## A. Herstellung erfindungsgemäß einzusetzender Polyacrylatharze

In einem Stahlkessel, ausgestattet mit Monomerzulauf, Initiatorzulauf, Thermometer, Ölheizung und Rückflußkühler werden 32 Gew.-Teile Butylglykol vorgelegt und auf 110°C aufgeheizt.

Dann wird eine Lösung aus 1,56 Gew.-Teilen t-Butylperethylhexanoat in 3,5 Gew.-Teilen Butylglykol in einer solchen Geschwindigkeit zugegeben, daß die Zugabe nach 1 h 30 min. abgeschlossen ist. Mit Beginn der Zugabe der t-Butylperethylhexanoatlösung wird auch mit der Zugabe einer Mischung aus (a1): 5,6 Gew.-Teilen Acrylsäure und (a2): 3,1 Gew.-Teilen Butylmethacrylat, 1,96 Gew.-Teilen Methylmethacrylat und 3,93 Gew.-Teilen Laurylmethacrylat und 1,96 Gew.-Teilen Styrol begonnen.

Die Mischung aus (a1) und (a2) wird in einer solchen Geschwindigkeit zugegeben, daß die Zugabe nach 1 h abgeschlossen ist.

Nachdem die t-Butylperethylhexanoatlösung vollständig zugegeben worden ist, wird die Polymerisationstemperatur noch 30 min auf 110°C gehalten.

Dann wird eine Lösung von 6,0 Gew.-Teilen t-Butylperethylhexanoat in 6,0 Gew.-Teilen Butylglykol in einer solchen Geschwindigkeit zugegeben, daß die Zugabe nach 5 h 30 min. abgeschlossen ist.

Mit Beginn der Zugabe der t-Butylperethylhexanoatlösung wird auch mit der Zugabe einer Mischung aus (b1): 21,6 Gew.-Teilen n-Butylmethacrylat, 20,0 Gew.-Teilen Methylmethacrylat und 20,0 Gew.-Teilen Laurylmethacrylat, (b2): 20,4 Gew.-Teilen Hydroxypropylacrylat und (b3): 15,0 Gew.-Teilen Styrol begonnen.

Die Mischung aus (b1), (b2) und (b3) wird in einer solchen Geschwindigkeit zugegeben, daß die Zugabe in 5 h abgeschlossen ist.

Die Temperatur wird noch 1 h 30 min. auf 110°C gehalten. Die so erhaltene Harzlösung wird destillativ unter Vakuum auf 80 Gew.-% (Feststoffgehalt) aufkonzentriert und mit Dimethylethanolamin bei ca. 80°C innerhalb von ca. 30 min. bis zu einem Neutralisationsgrad von 80 % neutralisiert. Die Harzlösung wird auf 60°C abgekühlt und die Heizung abgestellt.

Anschließend wird langsam soviel Wasser zugegeben, bis der Feststoffgehalt der Dispersion etwa 40 Gew.-% beträgt.

Die erhaltene Dispersion hat folgende Kennzahlen: Säurezahl 32,8 mg KOH/g, Hydroxylzahl: 80, zahlenmittleres Molekulargewicht: 4990, Teilchengröße 221 nm [1]

### A 2

In einem Stahlkessel ausgestattet mit Monomerzulauf, Initiatorzulauf, Thermometer, Ölheizung und Rückflußkühler werden 35,8 Gew.-Teile Butylglykol vorgelegt und auf 110°C aufgeheizt. Dann wird eine Lösung von 3,5 Gew.-Teilen t-Butylperethylhexanoat in 7,0 Gew.-Teilen Butylglykol in einer solchen Geschwindigkeit zugegeben, daß die Zugabe nach 5 h 30 min. abgeschlossen ist.

Mit Beginn der Zugabe der t-Butylperethylhexanoatlösung wird auch mit der Zugabe von (a1): 5,0 Gew.-Teile Acrylsäure begonnen. (a1) wird in einer solchen Geschwindigkeit zugegeben, daß die Zugabe nach 20 min. abgeschlossen ist. Nachdem (a1) vollständig zugegeben worden ist, wird eine Mischung aus (b1): 22,0 Gew.-Teilen n-Butylacrylat, 20,0 Gew.-Teilen t-Butylacrylat und 15,0 Gew.-Teilen Methylmethacrylat, (b2): 23,0 Gew.- Teilen Hydroxypropylacrylat und (b3): 15,0 Gew.-Teilen Styrol begonnen. Die Mischung aus (b1), (b2) und (b3) wird in einer solchen Geschwindigkeit zugegeben, daß die Zugabe nach 4 h 50 min. abgeschlossen ist.

[1] gemessen mit Laserlichtstreuung, Meßgerät: Malvern Autosizer 2C.

Nachdem die Mischung aus (b1), (b2) und (b3) vollständig zugegeben worden ist, wird die Temperatur noch 1 h 50 min. auf 110°C gehalten.

Die so erhaltene Harzlösung wird auf 80°C abgekühlt und mit Dimethylethanolamin bei ca. 80°C, innerhalb von ca. 30 min. bis zu einem Neutralisationsgrad von 82,5 % neutralisiert. Die Harzlösung wird auf 60°C abgekühlt und die Heizung abgestellt.

Anschließend wird langsam soviel Wasser zugegeben, bis der Feststoffgehalt der Dispersion etwa 40 Gew.-% beträgt.

Die erhaltene Dispersion hat folgende Kennzahlen: Säurezahl 33,5 mg KOH/g, Hydroxylzahl: 100, Teilchengröße: 267, Feststoffgehalt (in Gew.-%, 1 h 130°C): 40,0.

## B. Herstellung eindes nicht erfindungsgemäßen Polyacrylatharzes

In einem Stahlkessel ausgestattet mit Monomerzulauf, Initiatorzulauf, Thermometer, Ölheizung und Rückflußkühler werden 35,8 Gew.-Teile Butylglykol vorgelegt und auf 110°C aufgeheizt. Dann wird eine Lösung von 3,5 Gew.-Teilen t-Butylperethylhexanoat in 7,0 Gew.-Teilen Butylglykol in einer solchen Geschwindigkeit zugegeben, daß die Zugabe nach 5 h 30 min. abgeschlossen ist.

Mit Beginn der Zugabe der t-Butylperethylhexanoatlösung wird auch mit der Zugabe einer Mischung aus 22,0 Gew.-Teilen n-Butylacrylat, 20,0 Gew.-Teilen t-Butylacrylat, 15,0 Gew.-Teilen Methylmethacrylat, 15,0 Gew.-Teilen Styrol, 23,0 Gew.-Teilen Hydroxypropylacrylat und 5,0 Gew.-Teilen Acrylsäure begonnen.

Die Monomerenmischung wird in einer solchen Geschwindigkeit zugegeben, daß die Zugabe nach 5 h 10 min. abgeschlossen ist.

Weiteres Vorgehen analog zu A 2.

Die erhaltene Dispersion hat folgende Kennzahlen: Säurezahl: 39,0 mg KOH/g, Hydroxylzahl: 100, Feststoffgehalt (in Gew.-%, 1 h 130°C): 40,0.

## C. Herstellung einer wäßrigen Polyurethanharzdispersion

569 Gew.-Teile eines Kondensationsproduktes (zahlenmittleres Molekulargewicht: 1460) aus 1 Mol einer polymeren Fettsäure (Dimerengehalt mindestens 98 Gew.-%, Trimerengehalt höchstens 2 Gew.-%, Monomerengehalt höchstens Spuren), 1 Mol Isophthalsäure und 2,626 Mol Hexandiol, 46 Gew.-Teile Dimethylolpropionsäure, 7 Gew.-Teile Neopentylglykol, 420 Gew.-Teile Methylethylketon und 213 Gew.-Teile Isophorondiisocyanat werden in einem temperierba-Teile Isophorondiisocyanat werden in einem temperierbaren, mit Rührer und Wasserabscheider versehenen Reaktionsgefäß unter Stickstoffatmosphäre auf 80°C erhitzt. Die Reaktion wird bis zu einem NCO-Gehalt von 1,0 Gew.-%, bezogen auf die Gesamtzusammensetzung fortgeführt.

Dann werden 24 Gew.-Teile Trimethylolpropan zugegeben und es wird bei 80°C gerührt bis keine Isocyanatgruppen mehr nachweisbar sind.

Dann werden langsam 25,8 Gew.-Teile Dimethylethanolamin und anschließend 2552 Gew.-Teile deionisiertes Wasser eingerührt. Unter Vakuum wird das Methylethylketon abdestilliert.

Man erhält eine feinteilige Dispersion mit einem pH-Wert von 7,8, einem nichtflüchtigen Anteil von 27 Gew.-% und einer Säurezahl von 25 mg KOH/g.

## D. Herstellung einer wäßrigen Polyesterharzdispersion

In einem Reaktor, der mit einem Rührer, einem Thermometer und einer Füllkörperkolonne ausgestattet ist, werden 729 Gew.-Teile Neopentylglykol, 827 Gew.-Teile Hexandiol, 462 Gew.-Teile Hexahydrophthalsäureanhydrid und 1710 Gew.-Teile einer polymeren Fettsäure (Dimerengehalt mindestens 98 Gew.-%, Trimerengehalt höchstens 2 Gew.-%, Monomerengehalt höchstens Spuren) eingewogen und zum Schmelzen gebracht. Unter Rühren wird so aufgeheizt, daß die Kolonnenkopftemperatur 100°C nicht übersteigt. Es wird bei max. 220°C so lange verestert, bis eine Säurezahl von 8,5 erreicht ist. Nach Abkühlen auf 180°C werden 768 Gew.-Teile Trimellithsäureanhydrid zugegeben und weiter verestert, bis eine Säurezahl von 30 erreicht ist. Dann wird auf 120°C abgekühlt und mit 1410 Gew.-Teilen Butanol angelöst. Nach dem Abkühlen auf 90°C werden langsam 16,2 Gew.-Teile Dimethylethanolamin und anschließend 1248 Gew.-Teile deionisiertes Wasser eingerührt. Man erhält eine feinteilige Dispersion mit einem pH-Wert von 7,8, einem nichtflüchtigen Anteil von 60 Gew.-% und einer Säurezahl von 30 mg KOH/g.

### E. Herstellung eins wäßrigen Metallic-Basislacks (Vergleichsbeispiel)

Es werden 33,5 Gew.-Teile Verdickungsmittel (Paste eines Natrium-Magnesium-Silikates mit Schichtstruktur*, 3%ig in Wasser) vorgelegt.

Dazu wird eine Lösung aus 4,3 Gew.-Teilen Butylglykol und 6,0 Gew.-Teilen einer 90%igen Lösung eines handelsüblichen wasserverdünnbaren Melamin-Formaldehydharzes in Isobutanol (Cymel 327®[1]) unter Rühren zugegeben. Anschliessend werden dieser Mischung 33,3 Gew.-Teile der PUR-Dispersion gemäß C und 0,4 Gew.-Teile Dimethylethanolaminlösung (10%ig in $H_2O$) unter Rühren zugegeben. Getrennt davon wird eine Aluminiumpigmentaufschlämmung wie folgt hergestellt: 4,4 Gew.-Teile einer handelsüblichen chromatierten Aluminiumpaste ( 65%ig in Benzin/Solventnaphta/Butylglykol, durchschnittlicher Teilchendurchmesser: 15 $\mu$m), werden unter Zugabe von 4 Gew.-Teilen Butylglykol homogenisiert. Zu dieser Aufschlämmung werden anschließend 6,4 Gew.-Teile des wasserlöslichen Polyesterharzes gemäß D und 1,0 Gew.-Teile Polypropylenglykol (zahlenmittleres Molekulargewicht: 900) gegeben.

Diese Aluminiumpigmentaufschlämmung wird in die oben beschriebene Mischung eingerührt. Danach werden noch 6,7 Gew.-Teile deionisiertes Wasser zugegeben und mit Dimethylethanolaminlösung (10%ig in Wasser) ein pH-Wert von 7,65 - 7,85 eingestellt.

### F. Herstellung eines erfindungsgemäßen wäßrigen Metallic-Basislackes

Es werden 33,5 Gew.-Teile Verdickungsmittel (Paste eines Natrium-Magnesium-Silikates mit Schichtstruktur*, 3%ig in Wasser) vorgelegt.

Dazu wird eine Lösung aus 4,3 Gew.-Teilen Butylglykol und 6,0 Gew.-Teilen einer 90%igen Lösung eines handelsüblichen wasserverdünnbaren Melamin-Formaldehydharzes in Isobutanol (Cymel 327®) unter Rühren zugegeben. Anschließend werden dieser Mischung 33,3 Gew.-Teile der PUR Dispersion gemäß C, 0,4 Gew.-Teile Dimethylethanolaminlösung (10%ig in Wasser) und 4,8 Gew.-Teile der Polyacrylatharzdispersion gemäß A 1 nacheinander unter Rühren zugegeben. Getrennt davon wird eine Aluminiumpigmentaufschlämmung wie folgt hergestellt: 4,4 Gew.-Teile einer handelsüblichen chromatierten Aluminiumpaste (65%ig in Benzin/Solventnaphta/Butylglycol, durchschnittlicher Teilchendurchmesser: 15 $\mu$m) werden unter Zugabe von 4 Gew.-Teilen Butylglykol homogenisiert. Zu dieser Aufschlämmung werden anschließend 3,2 Gew.-Teile des wasserlöslichen Polyesterharzes gemäß D und 1,0 Gew.-Teile Polypropylenglykol (zahlenmittleres Molekulargewicht: 900) gegeben. Diese Aluminiumpigmentaufschlämmung wird in die oben beschriebene Mischung eingerührt. Danach werden noch 3,8 Gew.-Teile deionisiertes Wasser zugegeben und mit Dimethylethanolaminlösug (10%ig in Wasser) ein pH-Wert von 7,65 - 7,85 eingestellt.

### G. Applikation und Prüfung der wäßrigen Metallic-Basislacke

Die gemäß E und F hergestellten wäßrigen Metallic-Basislacke werden mit destilliertem Wasser auf einen Applikationsfestkörper von 24,2 Gew.-% eingestellt und auf ein mit einer handelsüblichen Elektrotauchlackierung und einem handelsüblichen Füller beschichtetes phosphatiertes Stahlblech so appliziert, daß eine Trockenfilmdicke von 12 - 15 $\mu$m erhalten wird. Die applizierten Basislacke werden 10 min. bei Raumtemperatur und 10 min. bei 80°C im Umluftofen getrocknet. Dann wird ein handelsüblicher 2-K-Klarlack auf Basis Polyacrylat/Polyisocyanat appliziert, anschließend wird kurz abgelüftet und 20 min. bei 140°C im Umluftofen eingebrannt.

* Laponite RD

®[1] Handelsprodukt der American Cyanamid Company

* Laponite RD

| Prüfergebnisse: | | |
|---|---|---|
| | Basislack gemäß E | Basislack gemäß F |
| L 25° (1) | 101,7 | 102,2 |
| L 70° (1) | 40,4 | 40,9 |
| Glanz (2) | 83 | 84 |
| DOI (3) | 92 | 92 |
| Gitterschnitt (4) | 0 | 0 |
| Glanz nach KK (5) | 81 | 81 |
| Gitterschnitt nach KK | 1 | 1 |
| DOI nach KK | 91 | 91 |

1) Farbanteil L* nach DIN 6174 bestimmt mit dem Goniospektralphotometer von der Firma Zeiss.
2) Glanzgrad nach DIN 67530, Winkel 20°
3) Distinctness of Reflected Image: Bei Beleuchtung der zu beurteilenden Oberfläche unter 30° wird die direkte Reflexion im Glanzwinkel -30° und in unmittelbarer Nähe des Glanzwinkels bei -30° ± 0,3° gemessen. Der hieraus ermittelte DOI-Wert korrespondiert mit der visuell empfundenen Schärfe des Spiegelbildes eines Gegenstandes auf dieser Oberfläche. Der DOI-Wert wird auch Bildschärfewert genannt. Meßwerte: 100 bester Wert; 0 schlechtester Wert.
4) Prüfung nach DIN 53151 inklusive Tesaabriß-Test.
5) 240 h bei 40° C KK (nach DIN 50017)

Prüfung der Viskositätsstabilität bei Scherbelastung

Zur Prüfung der Viskositätsstabilität bei Scherbelastung wurden Klarlackauszüge (Klarlackauszug = Basislack ohne Pigmente) der Basislacke gemäß E und F mit einem Blattrührer 1 h lang stark gerührt und anschließend in einem Viskosimeter mit einem Schergefälle von 0 bis 50 s$^{-1}$ geschert und vermessen. Der Klarlackauszug des Basislackes gemäß E zeigte einen Viskositätsabfall von ca. 40 %. Der Klarlackauszug des Basislackes gemäß F zeigte dagegen nur einen Viskositätsabfall von kleiner 10 %. Dieser geringe Viskositätsabfall hat keine negativen Auswirkungen auf das Applikationsverhalten und das Absetzverhalten.

H. Herstellung einer Pigmentpaste für wäßrige Uni-Basislacke

Es werden 10 Gew.-Teile Verdickungsmittel (Paste eines Natrium-Magnesium-Silikates mit Schichtstruktur, 3%ig in Wasser) vorgelegt: Dazu werden unter Rühren 4,5 Gew.-Teile Dimethylethanolaminlösung (10%ig in Wasser), 2 Gew.-Teile Polypropylenglykol (Molekulargewicht 900), 46,70 Gew.-Teile des Polyesterharzes gemäß D und 23,35 Gew.-Teile deionisiertes Wasser zugegeben. Dann werden folgende Pigmente einzeln zugegeben und eingerührt: 2,65 Gew.-Teile Irgazin Rot DPP BO®[1], 4,38 Gew.-Teile Cromophthalrot A2B®[1], 5,29 Gew.-Teile Novoperm Orange H2 70®[2] und 1,13 Gew.-Teile Sicotan Gelb 2 1912®[3]. Schließlich wird die Mischung 20 min. unter einem üblichen Labordissolver homogenisiert.
Anschließend wird auf einer üblichen Laborperlmühle bis zu einer Kornfeinheit nach Hegmann (ISO 152) von ≤5µm gemahlen.
Der pH-Wert der Pigmentpaste sollte zwischen 8 - 8,5 liegen, sonst wird er mit einer Dimethylethanolaminlösung (10%ig in Wasser) auf diesen Wert eingestellt.

®[1] Handelsprodukt der Ciba Geigy

®[2] Handeslprodukt der Hoechst AG

®[3] Handelsprodukt der BASF AG

## I. Herstellung wäßriger Uni-Basislacke

Unter Verwendung der Pigmentpaste und den unten aufgeführten Bestandteilen werden zwei Uni-Basislacke hergestellt, wobei der Uni-Basislack 2 als Vergleichsbeispiel anzusehen ist. In beiden Basislakken ist das Gewichtsverhältnis von Pigment zu Festharz und das Gewichtsverhältnis von OH-haltigem Festharz zu Melaminformaldehydharz gleich.

|  | Uni-Basislack 1 | Uni-Basislack 2 |
|---|---|---|
| Pigmentpaste: | 41,33 | 33,57 |
| Polyacrylatharz gemäß A 2 | 25,77 | - |
| Polyacrylatharz gemäß B | - | 20,90 |
| Luwipal LR 8789 | 5,88 | 4,77 |
| Resimene 4518 | 0,92 | 0,75 |
| deionisiertes Wasser | 26,10 | 40,01 |

Die o. g. Bestandteile werden nacheinader unter Rühren gemischt. Bei den Zahlenangaben handelt es sich um Gewichtsteile. Die so erhaltenen Basislacke werden auf eine Viskosität von 28 s (DIN 4) eingestellt. Uni-Basislack 1 weist bei dieser Viskosität einen Feststoffgehalt von 35 Gew.-% (1 h, 130°C) und Uni-Basislack 2 einen Feststoffgehalt von 28,3 Gew.-% (1 h, 130°C) auf.

## J. Applikation und Prüfung der Uni-Basislacke

Die gemäß I. hergestellten wäßrigen Uni-Basislacke werden nach 48 stündiger Lagerung nach folgendem Verfahren auf mit einer handelsüblichen Elektrotauchlackierung und einem handelsüblichen Füller beschichtete phosphatierte Stahlbleche appliziert: pneumatische Spritzapplikation bei einer relativen Luftfeuchte von 60 % und einer Temperatur von 23°C mit einem Druckgefäß, zweimaliger Auftrag, mit 2 Minuten Zwischenablüften nach dem ersten Auftrag, 1 Minute Ablüften nach dem zweiten Auftrag und 10 Minuten Trocknen bei 80°C im Umluftofen. Danach wird ein handelsübliche Klarlack auf Basis Polyacrylat/Melaminformaldehydharz appliziert, kurz abgelüftet und 30 Minuten bei 130°C eingebrannt.

Die Prüfung der so erhaltenen Zweischichtlackierung lieferte folgende Ergebnisse:

|  | Zweischichtlackierung mit Uni-Basislack 1 | Zweischichtlackierung mit Uni-Basislack 2 |
|---|---|---|
| Steinschlag nach VDA[1] | 2 | 2-3 |
| Gitterschnitt | 0 | 0 |
| Glanz 20° | 87 | 87 |
| Kochergrenze[2] | 45 µm | 28 µm |
| Läufergrenze[3] | 45 µm | 24 µm |

[1] VDA: Verband der deutschen Automobilindustrie; Beschußmedium: 1000 g kantiges Strahlgußmittel; Korngröße: 4 - 5 mm; Druck: 1,5 bar; VDA-Steinschlaggerät 508
[2] Applikation nach beschriebener Methode; Basislackschichtstärken bei denen Kocherblasen auftreten
[3] Applikation nach beschriebener Methode; Basislackschichtstärken bei denen bei Applikation auf senkrecht stehenden Lochtafeln und anschließender Vortrocknung in senkrechter Stellung in der Basislackschicht Läufer entstehen.

## Patentansprüche

1. Verfahren zur Herstellung einer mehrschichtigen, schützenden und/oder dekorativen Lackierung, bei dem
    (1) als Basislack ein wäßriger pigmentierter Basislack auf die Substratoberfläche aufgebracht wird
    (2) aus dem in Stufe (1) aufgebrachten Lack ein Polymerfilm gebildet wird
    (3) auf der so erhaltenen Basisschicht ein transparenter Decklack aufgebracht wird und anschließend

(4) die Basisschicht zusammen mit dem Decklack eingebrannt wird,

dadurch gekennzeichnet, daß der Basislack ein wasserverdünnbares Polyacrylatharz enthält, das erhältlich ist, indem

(I)

(a1) 2,5 bis 15, vorzugsweise 3 bis 7 Gew.-% eines mindestens eine Carboxylgruppe pro Molekül tragenden, mit (b1), (b2), (b3) und (a2) copolymerisierbaren ethylenisch ungesättigten Monomeren oder eines Gemisches aus solchen Monomeren zusammen mit

(a2) 0 bis 60, vorzugsweise 0 bis 28 Gew.-% eines carboxylgruppenfreien, mit (b1), (b2), (b3) und (a1) copolymerisierbaren ethylenisch ungesättigten Monomers oder eines Gemisches aus solchen Monomeren und

eine Komponente (b), bestehend aus

(b1) 40 bis 90, vorzugsweise 40 bis 80 Gew.-% eines mit (b2), (b3), (a1) und (a2) copolymerisierbaren, im wesentlichen carboxylgruppenfreien (Meth)acrylsäureesters oder eines Gemisches aus solchen (Meth)acrylsäureestern und

(b2) 0 bis 45, vorzugsweise 4 bis 34 Gew.-% eines mit (b1), (b3), (a1) und (a2) copolymerisierbaren, ethylenisch ungesättigten Monomeren, das mindestens eine Hydroxylgruppe pro Molekül trägt und im wesentlichen carboxylgruppenfrei ist oder eines Gemisches aus solchen Monomeren und

(b3) 0 bis 40, vorzugsweise 10 bis 30 Gew.-% eines mit (b1), (b2), (a1) und (a2) copolymerisierbaren, im wesentlichen carboxylgruppenfreien, von (b1) und (b2) verschiedenen, ethylenisch ungesättigten Monomeren oder eines Gemisches aus solchen Monomeren

nacheinander oder in Teilmengen alternierend zu einem organischen Lösemittel oder Lösemittelgemisch gegeben werden und in Gegenwart mindestens eines Polymerisationsinitiators polymerisiert werden und

(II) nach Beendigung der Polymerisation das erhaltene Polyacrylatharz zumindest teilweise neutralisiert und in Wasser dispergiert wird, wobei die Summe der Gewichtsanteile von (a1), (a2), (b1), (b2) und (b3) stets 100 Gew.-% ergibt und (b1), (b2), (b3), (a1) und (a2) in Art und Menge so ausgewählt werden, daß das Polyacrylatharz eine Hydroxylzahl von 0 bis 200, vorzugsweise 20 bis 120, eine Säurezahl von 20 bis 100, vorzugsweise 25 bis 50 und eine Glasübergangstemperatur ($T_G$) von -40 °C bis +60 °C, vorzugsweise -20 °C bis +40 °C, aufweist.

2. Wäßriger pigmentierter Lack enthaltend ein wasserverdünnbares Polyacrylatharz, das erhältlich ist, indem

(I)

(a1) 2,5 bis 15, vorzugsweise 3 bis 7 Gew.-% eines mindestens eine Carboxylgruppe pro Molekül tragenden, mit (b1), (b2), (b3) und (a2) copolymerisierbaren ethylenisch ungesättigten Monomeren oder eines Gemisches aus solchen Monomeren zusammen mit

(a2) 0 bis 60, vorzugsweise 0 bis 28 Gew.-% eines carboxylgruppenfreien, mit (b1), (b2), (b3) und (a1) copolymerisierbaren ethylenisch ungesättigten Monomers oder eines Gemisches aus solchen Monomeren und

eine Komponente (b), bestehend aus

(b1) 40 bis 90, vorzugsweise 40 bis 80 Gew.-% eines mit (b2), (b3), (a1) und (a2) copolymerisierbaren, im wesentlichen carboxylgruppenfreien (Meth)acrylsäureesters oder eines Gemisches aus solchen (Meth)acrylsäureestern und

(b2) 0 bis 45, vorzugsweise 4 bis 34 Gew.-% eines mit (b1), (b3), (a1) und (a2) copolymerisierbaren, ethylenisch ungesättigten Monomeren, das mindestens eine Hydroxylgruppe pro Molekül trägt und im wesentlichen carboxylgruppenfrei ist oder eines Gemisches aus solchen Monomeren und

(b3) 0 bis 40, vorzugsweise 10 bis 30 Gew.-% eines mit (b1), (b2), (a1) und (a2) copolymerisierbaren, im wesentlichen carboxylgruppenfreien, von (b1) und (b2) verschiedenen, ethylenisch ungesättigten Monomeren oder eines Gemisches aus solchen Monomeren

nacheinander oder in Teilmengen alternierend zu einem organischen Lösemittel oder Lösemittelgemisch gegeben werden und in Gegenwart mindestens eines Polymerisationsinitiators polymerisiert werden und

(II) nach Beendigung der Polymerisation das erhaltene Polyacrylatharz zumindest teilweise neutralisiert und in Wasser dispergiert wird, wobei die Summe der Gewichtsanteile von (a1), (a2), (b1), (b2) und (b3) stets 100 Gew.-% ergibt und (b1), (b2), (b3), (a1) und (a2) in Art und Menge so ausgewählt werden, daß das Polyacrylatharz eine Hydroxylzahl von 0 bis 200, vorzugsweise 20 bis 120, eine Säurezahl von 20 bis 100, vorzugsweise 25 bis 50 und eine Glasübergangstemperatur ($T_G$) von -40 °C bis +60 °C, vorzugsweise -20 °C bis +40 °C, aufweist.

3. Verfahren oder Lack nach Anspruch 1 oder 2, dadurch gekennzeichnet, daß der Basislack ein Metallpigment oder eine Mischung aus Metallpigmenten enthält.

4. Verfahren oder Lack nach einem der Ansprüche 1 bis 3, dadurch gekennzeichnet, daß der Basislack bzw. Lack neben dem wasserverdünnbaren Polyacrylatharz noch ein wasserverdünnbares Polyurethanharz und/oder ein wasserverdünnbares Polyesterharz und/oder ein wasserverdünnbares Aminoplastharz enthält.

5. Verfahren oder Lack nach einem der Ansprüche 1 bis 4, dadurch gekennzeichnet, daß der Basislack bzw. Lack ein nichtmetallisches Pigment oder eine Mischung aus nichtmetallischen Pigmenten und eine Mischung aus
    (A) 10 bis 95, vorzugsweise 25 bis 70 Gew.-% des wasserverdünnbaren Polyacrylatharzes,
    (B) 5 bis 50, vorzugsweise 10 bis 40 Gew.-% eines Aminoplastharzes,
    (C) 0 bis 85, vorzugsweise 20 bis 60 Gew.-% eines wasserverdünnbaren Polyesterharzes und
    (D) 0 bis 85, vorzugsweise 0 bis 40 Gew.-% eines wasserverdünnbaren Polyurethanharzes enthält,
wobei die Summe der Gewichtsanteile der Komponenten (A) bis (D) stets 100 Gew.-% beträgt.

6. Verfahren oder Lack nach einem der Ansprüche 1 bis 5, dadurch gekennzeichnet, daß der Basislack bzw. Lack ein Metallpigment und eine Mischung aus
    (A) 0,1 bis 60, vorzugsweise 1 bis 30 Gew.-% des wasserverdünnbaren Polyacrylatharzes,
    (B) 0 bis 50, vorzugsweise 5 bis 30 Gew.-% eines Aminoplastharzes,
    (C) 0 bis 50, bevorzugt 15 bis 40 Gew.-% eines wasserverdünnbaren Polyesterharzes und
    (D) 10 bis 99,9, vorzugsweise 20 bis 60 Gew.-% eines wasserverdünnbaren Polyurethanharzes
enthält, wobei die Summe der Gewichtsanteile der Komponenten (A) bis (D) stets 100 Gew.-% beträgt.

7. Verfahren oder Lack nach einem der Ansprüche 4 bis 6, dadurch gekennzeichnet, daß das wasserverdünnbare Polyesterharz erhältlich ist, indem
    ($\alpha$) Polyole oder ein Gemisch aus Polyolen und
    ($\beta$) Polycarbonsäuren oder Polycarbonsäureanhydride oder ein Gemisch aus Polycarbonsäuren und/oder Polycarbonsäureanhydriden zu einem Polyesterharz mit einem zahlenmittleren Molekulargewicht von 600 bis 5000, vorzugsweise 800 bis 2500, einer Säurezahl von 20 bis 70, vorzugsweise 25 bis 55 und einer Hydroxylzahl von 30 bis 200, vorzugsweise 45 bis 100 umgesetzt werden und das erhaltene Polyesterharz wenigstens teilweise neutralisiert wird, wobei
    - die Komponenten ($\alpha$) und ($\beta$) in einem molaren Verhältnis von 1,15 - 2,00 : 1, vorzugsweise 1,2 - 1,5 : 1 eingesetzt werden,
    - die Komponente ($\alpha$) zu 30 bis 100 Mol-% aus aliphatischen Diolen besteht, die mindestens ein $\alpha$-C-Atom enthalten, das sekundär, tertiär oder Glied eines kohlenstoffhaltigen Ringsystems ist und
    - die Komponente ($\beta$) zu 50 bis 100 Mol-% aus aromatischen und/oder cycloaliphatischen Polycarbonsäuren und zu 15 bis 40 Mol-% aus Tri- und/oder Tetracarbonsäuren besteht, wobei die Tri- und/oder Tetracarbonsäuren so eingesetzt werden, daß sie im statistischen Mittel über mindestens zwei Carboxylgruppen in die Polyesterharzmoleküle eingebaut werden.

8. Verfahren oder Lack nach Anspruch 7, dadurch gekennzeichnet, daß die Komponente ($\beta$) zu 50 bis 80 Mol-% aus aromatischen und/oder cycloaliphatischen Polycarbonsäuren und zu 20 bis 50 Mol-% aus einer oder mehreren polymeren Fettsäuren besteht, wobei polymere Fettsäuren nicht als cycloaliphatische Polycarbonsäuren angesehen werden.

9. Verwendung des wäßrigen Lacks nach einem der Ansprüche 2 bis 8 als Basislack zur Herstellung von mehrschichtigen, schützenden und/oder dekorativen Lackierungen des basecoat/clearcoat Typs.

**Claims**

1. Process for the production of a multicoat protective and/or decorative finish in which
    (1) an aqueous pigmented basecoat is applied to the substrate surface as basecoat,

(2) a polymer film is formed from the paint applied in stage (1),

(3) a transparent topcoat is applied to the basecoat obtained in this way and subsequently

(4) the basecoat is baked together with the topcoat,

characterized in that the basecoat comprises a water-thinnable polyacrylate resin which can be obtained by adding, either consecutively or alternately in part amounts,

(I)

(a1) 2.5 to 15, preferably 3 to 7% by weight of an ethylenically unsaturated monomer which contains at least one carboxyl group per molecule and is copolymerizable with (b1), (b2), (b3) and (a2), or a mixture of such monomers, together with

(a2) 0 to 60, preferably 0 to 28% by weight of an ethylenically unsaturated monomer which is free from carboxyl groups and is copolymerizable with (b1), (b2), (b3) and (a1), or a mixture of such monomers, and

a component (b), consisting of

(b1) 40 to 90, preferably 40 to 80% by weight of a (meth)acrylic acid ester which is copolymerizable with (b2), (b3), (a1) and (a2) and is essentially free from carboxyl groups, or a mixture of such (meth)acrylic acid esters and

(b2) 0 to 45, preferably 4 to 34% by weight of an ethylenically unsaturated monomer which is copolymerizable with (b1), (b3), (a1) and (a2), contains at least one hydroxyl group per molecule and is essentially free from carboxyl groups, or a mixture of such monomers, and

(b3) 0 to 40, preferably 10 to 30% by weight of an ethylenically unsaturated monomer which is copolymerizable with (b1), (b2), (a1) and (a2), is essentially free from carboxyl groups and is different from (b1) and (b2), or a mixture of such monomers,

to an organic solvent or solvent mixture and carrying out a polymerization in the presence of at least one polymerization initiator and

(II) at the end of the polymerization neutralizing, at least partially, the resultant polyacrylate resin and dispersing it in water, the sum of the proportions by weight of (a1), (a2), (b1), (b2) and (b3) always being 100% by weight, and the type and amount of (b1), (b2), (b3), (a1) and (a2) being chosen so that the polyacrylate resin has a hydroxyl value of 0 to 200, preferably of 20 to 120, an acid value of 20 to 100, preferably of 25 to 50, and a glass transition temperature ($T_G$) of -40°C to +60°C, preferably of -20°C to +40°C.

2. Aqueous pigmented paint, comprising a water-thinnable polyacrylate resin which can be obtained by adding, either successively or alternately in part amounts,

(I)

(a1) 2.5 to 15, preferably 3 to 7% by weight of an ethylenically unsaturated monomer which contains at least one carboxyl group per molecule and is copolymerizable with (b1), (b2), (b3) and (a2), or a mixture of such monomers, together with

(a2) 0 to 60, preferably 0 to 28% by weight of an ethylenically unsaturated monomer which is free from carboxyl groups and is copolymerizable with (b1), (b2), (b3) and (a1), or a mixture of such monomers, and

a component (b), consisting of

(b1) 40 to 90, preferably 40 to 80% by weight of a (meth)acrylic acid ester which is copolymerizable with (b2), (b3), (a1) and (a2) and is essentially free from carboxyl groups, or a mixture of such (meth)acrylic acid esters, and

(b2) 0 to 45, preferably 4 to 34% by weight of an ethylenically unsaturated monomer which is copolymerizable with (b1), (b3), (a1) and (a2), contains at least one hydroxyl group per molecule and is essentially free from carboxyl groups, or a mixture of such monomers, and

(b3) 0 to 40, preferably 10 to 30% by weight of an ethylenically unsaturated monomer which is copolymerizable with (b1), (b2), (a1) and (a2), is essentially free from carboxyl groups and is different from (b1) and (b2), or a mixture of such monomers,

to an organic solvent or solvent mixture and carrying out a polymerization in the presence of at least one polymerization initiator and,

(II) at the end of the polymerization, neutralizing, at least partially, the resultant polyacrylate resin and dispersing it in water, the sum of the proportions by weight of (a1), (a2), (b1), (b2) and (b3) always being 100% by weight and the type and amount of (b1), (b2), (b3), (a1) and (a2) being chosen so that the polyacrylate resin has a hydroxyl value of 0 to 200, preferably of 20 to 120, an acid value of 20 to 100, preferably of 25 to 50, and a glass transition temperature ($T_G$) of -40°C to +60°C, preferably of -20°C to +40°C.

3. Process or paint according to Claim 1 or 2, characterized in that the basecoat contains a metallic pigment or a mixture of metallic pigments.

4. Process or paint according to any one of Claims 1 to 3, characterized in that the basecoat or the paint comprises, in addition to the water-thinnable polyacrylate resin, a water-thinnable polyurethane resin and/or a water-thinnable polyester resin and/or a water-thinnable amino resin.

5. Process or paint according to any one of Claims 1 to 4, characterized in that the basecoat or the paint comprises a non-metallic pigment or a mixture of non-metallic pigments and a mixture of
   (A) 10 to 95, preferably 25 to 70% by weight of the water-thinnable polyacrylate resin,
   (B) 5 to 50, preferably 10 to 40% by weight of an amino resin,
   (C) 0 to 85, preferably 20 to 60% by weight of a water-thinnable polyester resin and
   (D) 0 to 85, preferably 0 to 40% by weight of a water-thinnable polyurethane resin,
   the percentages by weight of the components (A) to (D) always totalling 100.

6. Process or paint according to any one of Claims 1 to 5, characterized in that the basecoat or the paint comprises a metallic pigment and a mixture of
   (A) 0.1 to 60, preferably 1 to 30% by weight of the water-thinnable polyacrylate resin,
   (B) 0 to 50, preferably 5 to 30% by weight of an amino resin,
   (C) 0 to 50, preferably 15 to 40% by weight of a water-thinnable polyester resin and
   (D) 10 to 99.9, preferably 20 to 60% by weight of a water-thinnable polyurethane resin,
   the percentages by weight of the components (A) to (D) always totalling 100.

7. Process or paint according to any one of Claims 4 to 6, characterized in that the water-thinnable polyester resin can be obtained by reacting
   ($\alpha$) polyols or a mixture of polyols and
   ($\beta$) polycarboxylic acids or polycarboxylic anhydrides, or a mixture of polycarboxylic acids and/or polycarboxylic anhydrides, to form a polyester resin having a number average molecular weight of 600 to 5000, preferably of 800 to 2500, an acid value of 20 to 70, preferably of 25 to 55, and a hydroxyl value of 30 to 200, preferably of 45 to 100, and the resultant polyester resin is neutralized, at least partially, in which reaction
   - the components ($\alpha$) and ($\beta$) are used in a molar ratio of 1.15 - 2.00:1, preferably 1.2 - 1.5:1,
   - the component ($\alpha$) consists of 30 to 100 mol% of aliphatic diols containing at least one $\alpha$ carbon atom which is secondary, tertiary or a member of a carbon-containing ring system, and
   - the component ($\beta$) consists of 50 to 100 mol% of aromatic and/or cycloaliphatic polycarboxylic acids and of 15 to 40 mol% of tricarboxylic and/or tetracarboxylic acids, the tricarboxylic and/or tetracarboxylic acids being used in such a way that they are incorporated in a statistical average in the polyester resin molecules via at least two carboxyl groups.

8. Process or paint according to Claim 7, characterized in that the component ($\beta$) consists of 50 to 80 mol% of aromatic and/or cycloaliphatic polycarboxylic acids and of 20 to 50 mol% of one or more polymeric fatty acids, polymeric fatty acids not being considered as cycloaliphatic polycarboxylic acids.

9. Use of the aqueous paint according to any one of Claims 2 to 8 as basecoat for the production of multicoat protective and/or decorative finishes of the basecoat/clearcoat type.

**Revendications**

1. Procédé de préparation d'une couche de laque multicouche, protectrice et/ou décorative, lors duquel
   (1) on applique en tant que laque de base une laque de base pigmentée aqueuse sur la surface du substrat,
   (2) on forme un film polymère à partir de la laque appliquée dans l'étape (1),
   (3) on applique, sur la couche de base ainsi obtenue, une laque de finition transparente et
   (4) on soumet ensuite conjointement à cuisson la couche de base et la laque de finition,
   caractérisé en ce que la laque de base contient une résine de polyacrylate diluable à l'eau, que l'on peut obtenir en ce que
   (I) l'on ajoute successivement ou en alternance sous forme de quantités partielles à un solvant organique ou à un mélange de solvants et que l'on polymérise en présence d'au moins un agent

EP 0 521 919 B1

initiateur de polymérisation

(a1) 2,5 à 15, de préférence 3 à 7 % en poids d'un monomère éthyléniquement insaturé, copolymérisable avec (b1), (b2), (b3) et (a2), portant au moins un groupe carboxyle par molécule, ou un mélange de tels monomères conjointement à

(a2) 0 à 60, de préférence 0 à 28 % en poids d'un monomère éthyléniquement insaturé copolymérisable avec (b1), (b2), (b3) et (a1), exempt de groupes carboxyles, ou d'un mélange de tels monomères et

un composant (b), consistant

(b1) en 40 à 90, de préférence 40 à 80 % en poids d'un ester de l'acide (méth)acrylique, essentiellement exempt de groupes carboxyles, copolymérisable avec (b2), (b3), (a1) et (a2), ou d'un mélange de tels esters de l'acide (méth)acrylique et

(b2) en 0 à 45, de préférence 4 à 34 % en poids d'un monomère éthyléniquement insaturé, copolymérisable avec (b1), (b3), (a1) et (a2), qui porte au moins un groupe hydroxyle par molécule et est essentiellement exempt de groupes carboxyles, ou d'un mélange de tels monomères et

(b3) en 0 à 40, de préférence 10 à 30 % en poids d'un monomère éthyléniquement insaturé, différent de (b1) et (b2), essentiellement exempt de groupes carboxyles, copolymérisable avec (b1), (b2), (a1) et (a2), ou d'un mélange de tels monomères et

(II) en ce que l'on neutralise, après achèvement de la polymérisation, au moins en partie, la résine de polyacrylate obtenue et en ce que l'on procède à sa dispersion dans l'eau, la somme des proportions en poids de (a1), (a2), (b1), (b2) et (b3) aboutissant dans tous les cas à 100 % en poids et (b1), (b2) (b3), (a1) et (a2) étant choisis d'un type et dans une quantité tels que la résine de polyacrylate présente un indice hydroxyle de 0 à 200, de préférence de 20 à 120, un indice d'acidité de 20 à 100, de préférence de 25 à 50 et une température de transition vitreuse ($T_G$) de -40°C à +60°C, de préférence de -20°C à +40°C.

2. Laque pigmentée aqueuse contenant une résine de polyacrylate diluable à l'eau, que l'on peut obtenir en ce que

(I) l'on ajoute successivement ou en alternance sous forme de quantités partielles à un solvant organique ou à un mélange de solvants et que l'on polymérise en présence d'au moins un agent initiateur de polymérisation

(a1) 2,5 à 15, de préférence 3 à 7 % en poids d'un monomère éthyléniquement insaturé, copolymérisable avec (b1), (b2), (b3) et (a2), portant au moins un groupe carboxyle par molécule, ou un mélange de tels monomères conjointement à

(a2) 0 à 60, de préférence 0 à 28 % en poids d'un monomère éthyléniquement insaturé copolymérisable avec (b1), (b2), (b3) et (a1), exempt de groupes carboxyles, ou d'un mélange de tels monomères et

un composant (b), consistant

(b1) en 40 à 90, de préférence 40 à 80 % en poids d'un ester de l'acide (méth)acrylique, essentiellement exempt de groupes carboxyles, copolymérisable avec (b2), (b3), (a1) et (a2), ou un mélange de tels esters de l'acide (méth)acrylique et

(b2) en 0 à 45, de préférence 4 à 34 % en poids d'un monomère éthyléniquement insaturé, copolymérisable avec (b1), (b3), (a1) et (a2), qui porte au moins un groupe hydroxyle par molécule et est essentiellement exempte de groupes carboxyles, ou d'un mélange des tels monomères et

(b3) en 0 à 40, de préférence 10 à 30 % en poids d'un monomère éthyléniquement insaturé, différent de (b1) et (b2), essentiellement exempt de groupes carboxyles, copolymérisable avec (b1), (b2), (a1) et (a2), ou d'un mélange de tels monomères et

(II) en ce que l'on neutralise, après achèvement de la polymérisation, au moins en partie, la résine de polyacrylate obtenue et en ce que l'on procède à sa dispersion dans l'eau, la somme des proportions en poids de (a1), (a2), (b1), (b2) et (b3) aboutissant dans tous les cas à 100 % en poids et (b1), (b2) (b3), (a1) et (a2) étant choisis d'un type et dans une quantité tels que la résine de polyacrylate présente un indice hydroxyle de 0 à 200, de préférence de 20 à 120, un indice d'acidité de 20 à 100, de préférence de 25 à 50 et une température de transition vitreuse ($T_G$) de -40°C à +60°C, de préférence de -20°C à +40°C.

3. Procédé ou laque selon la revendication 1 ou 2, caractérisé en ce que la laque de base contient un pigment métallique ou un mélange de pigments métalliques.

21

4. Procédé ou laque selon l'une quelconque des revendications 1 à 3, caractérisé en ce que la laque de base, respectivement la laque, outre la résine de polyacrylate diluable à l'eau, contient encore une résine de polyuréthane diluable à l'eau et/ou une résine de polyester diluable à l'eau et/ou une résine aminoplaste diluable à l'eau.

5. Procédé ou laque selon l'une quelconque des revendications 1 à 4, caractérisé en ce que la laque de base respectivement la laque, contient un pigment non métallique ou un mélange de pigments non métalliques et un mélange
   (A) de 10 à 95, de préférence de 25 à 70 % en poids de la résine de polyacrylate diluable à l'eau,
   (B) de 5 à 50, de préférence de 10 à 40 % en poids d'une résine aminoplaste,
   (C) de 0 à 85, de préférence de 20 à 60 % en poids d'une résine de polyester diluable à l'eau et
   (D) de 0 à 85, de préférence de 0 à 40 % en poids d'une résine de polyuréthane diluable à l'eau,
   la somme des proportions en poids des composants (A) à (D) étant dans chaque cas de 100 % en poids.

6. Procédé ou laque selon l'une quelconque des revendications 1 à 5, caractérisé en ce que la laque de base, respectivement la laque, contient un pigment métallique et un mélange
   (A) de 0,1 à 60, de préférence de 1 à 30 % en poids de la résine de polyacrylate diluable à l'eau,
   (B) de 0 à 50, de préférence de 5 à 30 % en poids d'une résine aminoplaste,
   (C) de 0 à 50, de préférence de 15 à 40 % en poids d'une résine de polyester diluable à l'eau et
   (D) de 10 à 99,9, de préférence de 20 à 60 % en poids d'une résine de polyuréthane diluable à l'eau,
   la somme des proportions en poids des composants (A) à (D) étant dans chaque cas de 100 % en poids.

7. Procédé ou laque selon l'une quelconque des revendications 4 à 6, caractérisé en ce que l'on peut obtenir la résine de polyester diluable à l'eau en ce que l'on fait réagir
   ($\alpha$) des polyols ou un mélange de polyols et
   ($\beta$) des acides polycarboxyliques ou des anhydrides d'acides polycarboxyliques ou un mélange d'acides polycarboxyliques et/ou d'anhydrides d'acides polycarboxyliques pour former une résine de polyester ayant un poids moléculaire moyen au nombre de 600 à 5 000, de préférence de 800 à 2 500, un indice d'acidité de 20 à 70, de préférence de 25 à 55 et un indice hydroxyle de 30 à 200, de préférence de 45 à 100 et en ce que l'on neutralise au moins en partie la résine de polyester obtenue,
   - les composants ($\alpha$) et ($\beta$) étant utilisés dans un rapport molaire de 1,15 - 2,00 : 1, de préférence de 1,2 - 1,5 : 1,
   - le composant ($\alpha$) étant composé de 30 à 100 % en moles de diols aliphatiques, qui contiennent au moins un atome de C en position $\alpha$, qui est secondaire, tertiaire ou fait partie d'un système cyclique contenant du carbone et
   - le composant ($\beta$) étant composé de 50 à 100 % en moles d'acides polycarboxyliques aromatiques et/ou cycloaliphatiques et de 15 à 40 % en moles d'acides tricarboxyliques et/ou tétracarboxyliques, les acides tricarboxyliques et/ou tétracarboxyliques étant utilisés de sorte qu'ils soient introduits dans la molécule de polyester en moyenne statistique par l'intermédiaire d'au moins deux groupes carboxyles.

8. Procédé ou laque selon la revendication 7, caractérisé en ce que le composant ($\beta$) se compose de 50 à 80 % en moles d'acides polycarboxyliques aromatiques et/ou cycloaliphatiques et de 20 à 50 % en moles d'un ou de plusieurs acides gras polymères, les acides gras polymères ne devant pas être considérés comme des acides polycarboxyliques cycloaliphatiques.

9. Utilisation de la laque aqueuse selon l'une quelconque des revendications 2 à 8 en tant que laque de base pour la préparation de couches de laque multicouche, protectrices et/ou décoratives du type basecoat/clearcoat [couche de base/couche claire].